# EUROPEAN PATENT SPECIFICATION

(11) **EP 3 782 890 B1**
(45) Date of publication and mention of the grant of the patent: **02.08.2023**
(21) Application number: 20191645.9
(22) Date of filing: 19.08.2020
(51) Int. Cl.: B62J 17/06, B62K 11/04

(54) **STRADDLED VEHICLE**
GRÄTSCHSITZFAHRZEUG
VÉHICULE À ENFOURCHER

(30) Priority: 21.08.2019 JP 2019150944
(43) Date of publication of application: 24.02.2021
(73) Proprietor: Yamaha Hatsudoki Kabushiki Kaisha, Iwata-shi Shizuoka 438-8501 (JP)
(72) Inventor: TSAI, Cheng-Ting, 320 Taiwan (TW); CHIEN, I-Lun, 320 Taiwan (TW)
(74) Representative: Grünecker Patent- und Rechtsanwälte PartG mbB

(56) References cited:
- EP-A2- 2 610 153

## Description

The present invention relates to a straddled vehicle and in particular relates to a front portion of a straddled vehicle.

A straddled vehicle has been known conventionally in which a front cover unit that configures the front surface of a vehicle structure is provided in front of the legs of a driver sitting on a seat. For example, in the straddled vehicle 901 described in JP 2007-283927 A, the front cover unit 910 is configured by a front cover 915 and a leg shield 916 as illustrated in fig. 15(a)-(b). Such a straddled vehicle is also shown in EP 2 610 153 A2 which discloses a straddled vehicle according to the preamble of claim 1.

In a side view of the vehicle, at least a portion of a boundary B' that adjoins the front cover 915 and the leg shield 916 extends in the up-down direction in a manner of crossing from an upper edge portion to a lower edge portion of the front cover unit 910.

A footboard 919 for allowing the driver to mount his/her feet is provided that is formed in a position below and behind the leg shield 916 and between the leg shield 916 and a seat 906.

In the aforementioned straddled vehicle, an upper portion of the front cover unit 910 positioned above a virtual horizontal line H' that passes through the sitting surface of the seat 906 as seen in the side view of the vehicle, includes a shape that is formed widely in the front view of the vehicle.

In this case, the legs (in particular, the knees) of the driver may come into contact with the upper portion of the front cover unit 910 due to the riding method (posture, position, etc.) or the body type of the driver.

When the legs (in particular, the knees) of the driver come into contact with the upper portion of the front cover unit 910, in particular, the left shoulder portion and the right shoulder portion thereof, the leg shield 916 is pushed forward.

As a result, there is a fear that the leg shield 916 and the front cover 915 may be shifted in the up-down direction relative to each other because the external force received by the leg shield 916 is also transmitted to the front cover 915.

An object of present invention is to provide a straddled vehicle in which shifting between a leg shield and a front cover can be suppressed in a front cover unit.

According to the present invention said object is solved by a straddled vehicle having the features of independent claim 1. Preferred embodiments are laid down in the dependent claims.

In view of the present teaching it has been conceived of the following as a result of keen examination of a configuration with which the knees of a driver sitting in the seat are not likely to come into contact with the front cover unit.

Firstly, the front cover unit was changed to a structure with which the knees are less likely to come into contact by recessing an upper portion that the knees of the driver come into contact with and that is positioned above a virtual horizontal line that passes through the sitting surface of the seat as seen in the side view of the vehicle.

That is, the upper portion that is positioned above the virtual horizontal line that passes through the sitting surface of the seat as seen in the side view of the vehicle of the front cover unit is formed narrowly toward the inside in the vehicle width direction. Therefore, even if the knees of the driver sitting on the seat move toward the front of the vehicle, the knees are less likely to come into contact with the upper portion of the front cover unit.

Consequently, relative shifting in the up-down direction between the front cover and the leg shield of the front cover unit caused by contact with the knees of the driver, is less likely to occur.

However, as to the front cover unit, if the upper portion positioned above the virtual horizontal line that passes through the sitting surface of the seat as seen in the side view of the vehicle is formed narrowly toward the inside in the vehicle width direction, the traveling wind during traveling of the straddled vehicle may directly contact the knees of the driver, which may cause a problem that the comfort of the driver is reduced.

More specifically, as to the front cover unit, when the upper portion positioned above the virtual horizontal line that passes through the sitting surface of the seat as seen in the side view of the vehicle is formed narrowly toward the inside in the vehicle width direction, the size of the upper portion of the front cover unit becomes smaller in the vehicle width direction. As a result, blocking of the traveling wind is lost, the traveling wind blows directly onto the knees of the driver, and the comfort of the driver is reduced. On the other hand, since the front cover is formed in a manner of extending forward and downward of the vehicle as seen in the side view of the vehicle, the distance from the front edge thereof to an upper edge portion that is coupled with the upper edge portion of the leg shield is longer. As a result, a force (moment) applied to the upper edge portion of the front cover increases and there is a particular need to ensure the coupling rigidity between the upper edge portion of the front cover and the upper edge portion of the leg shield.

However, as to the front cover unit, when the upper portion positioned above the virtual horizontal line that passes through the sitting surface of the seat as seen in the side view of the vehicle is formed narrowly toward the inside in the vehicle width direction, the upper edge portion of the boundary that adjoins the front cover and the leg shield becomes shorter than when the upper portion is formed widely as seen in the front view of the vehicle. That is, since the coupling portion where the upper edge portion of the front cover and the upper edge portion of the leg shield are coupled becomes smaller, the coupling rigidity between the front cover and the leg shield is reduced.

Therefore, when the moment force from the front end of the front cover, produced by the vibration in the up-down direction due to the traveling of the vehicle, is transmitted to the upper edge portion of the front cover, the coupling between the upper edge portion of the front cover and the upper edge portion of the leg shield cannot be maintained sufficiently, and there is a fear that relative shifting in the up-down direction between the front cover and the leg shield will occur.

As a result, it becomes difficult to sufficiently suppress the relative shifting in the up-down direction between the front cover and the leg shield caused by the vibration of the front cover due to the traveling of the straddled vehicle.

Accordingly, it has been undertook a keen examination of a new method for resolving, at the same time, the issue of ensuring the coupling rigidity between the front cover and the leg shield and suppressing the relative shifting in the up-down direction between the front cover and the leg shield, and the issue of suppressing the reduction in comfort for the knees of the driver, and consequently conceived the following configuration.

A straddled vehicle of the present teaching includes a head pipe, a seat, a front cover unit, a footboard portion, a left side reinforcement cover, and a right side reinforcement cover. The seat is arranged further to the rear of the vehicle than the head pipe and includes a sitting surface on which the driver sits. The front cover unit is arranged further to the front than the seat. The footboard portion is formed in a position below and behind the front cover unit and between the front cover unit and the seat, and is a portion for the driver to place his/her feet. The left side reinforcement cover is formed separately from the front cover unit. The right side reinforcement cover is formed separately from the front cover unit. The front cover unit includes a front cover and a leg shield. The front cover is arranged in front of the head pipe and is formed in a manner of extending forward and downward of the vehicle. The leg shield is arranged to the rear of the head pipe and is connected to the front cover. The front cover includes a front cover upper left portion, a front cover lower left portion, a front cover upper right portion, and a front cover lower right portion. The front cover upper left portion is positioned above a virtual horizontal line that passes through the sitting surface of the seat as seen in the left side view of the vehicle. The front cover lower left portion is positioned below the virtual horizontal line as seen in the left side view of the vehicle. The front cover upper right portion is positioned above the virtual horizontal line as seen in the right side view of the vehicle. The front cover lower right portion is positioned below the virtual horizontal line as seen in the right side view of the vehicle. The leg shield includes a leg shield upper left portion, a leg shield lower left portion, a leg shield upper right portion, and a leg shield lower right portion. The leg shield upper left portion is positioned above the virtual horizontal line as seen in the left side view of the vehicle. The leg shield lower left portion is positioned below the virtual horizontal line as seen in the left side view of the vehicle. The leg shield upper right portion is positioned above the virtual horizontal line as seen in the right side view of the vehicle. The leg shield lower right portion is positioned below the virtual horizontal line as seen in the right side view of the vehicle. As seen in the front view of the vehicle, the front cover upper left portion and the leg shield upper left portion are arranged further to the inside in the vehicle width direction than at least a portion of the front cover lower left portion, and the front cover upper right portion and the leg shield upper right portion are arranged further to the inside in the vehicle width direction than at least a portion of the front cover lower right portion. As seen in the side view of the vehicle, at least a portion of a boundary that adjoins the front cover and the leg shield extends in the up-down direction. The left side reinforcement cover is arranged to the outside in the vehicle width direction of the front cover upper left portion and the leg shield upper left portion as seen in the plan view of the vehicle, and at least a portion of the left side reinforcement cover protrudes further to the outside in the vehicle width direction than the boundary as seen in the plan view of the vehicle and overlaps the boundary as seen in the left side view of the vehicle. The right side reinforcement cover is arranged to the outside in the vehicle width direction of the front cover upper right portion and the leg shield upper right portion as seen in the plan view of the vehicle, and at least a portion of the right side reinforcement cover protrudes further to the outside in the vehicle width direction than the boundary as seen in the plan view of the vehicle and overlaps the boundary as seen in the right side view of the vehicle. The left side reinforcement cover includes a left side reinforcement cover left front portion that is positioned further to the front than the boundary and that is connected to the front cover as seen in the left side view of the vehicle, and a left side reinforcement cover left rear portion that is positioned further to the rear than the boundary and that is connected to the leg shield as seen in the left side view of the vehicle. The left side reinforcement cover left front portion is longer than the left side reinforcement cover left rear portion in the vehicle front-back direction as seen in the left side view of the vehicle. The left side reinforcement cover left rear portion is longer than the left side reinforcement cover left front portion in the vehicle up-down direction as seen in the left side view of the vehicle. The right side reinforcement cover includes a right side reinforcement cover right front portion that is positioned further to the front than the boundary and that is connected to the front cover as seen in the right side view of the vehicle, and a right side reinforcement cover right rear portion that is positioned further to the rear than the boundary and that is connected to the leg shield as seen in the right side view of the vehicle. The right side reinforcement cover right front portion is longer than the right side reinforcement cover right rear portion in the vehicle front-back direction as seen in the right side view of the vehicle. The right side reinforcement cover right rear portion is longer than the right side reinforcement cover right front portion in the vehicle up-down direction as seen in the right side view of the vehicle.

More specifically, in the straddled vehicle of the present teaching, as to the front cover unit, the upper portions that the knees of the driver come into contact with and which are positioned above the virtual horizontal line that passes through the sitting surface of the seat as seen in the side view of the vehicle, are recessed toward the inside in the vehicle width direction. As a result, the upper portions of the front cover unit that are positioned above the virtual horizontal line that passes through the sitting surface of the seat as seen in the side view of the vehicle, are formed narrowly toward the inside in the vehicle width direction as seen in the side view of the vehicle of the front cover unit. Therefore, even if the knees of the driver sitting on the seat move toward the front of the vehicle, the knees are not likely to come into contact with the upper portions of the front cover unit. Consequently, relative shifting in the up-down direction between the front cover and the leg shield of the front cover unit caused by contact with the knees of the driver, can be suppressed.

In addition, as indicated above, as to the front cover unit, when the upper portions that are positioned above the virtual horizontal line that passes through the sitting surface of the seat as seen in the side view of the vehicle, are recessed toward the inside in the vehicle width direction, the upper edge portions of the boundary that adjoins the front cover and the leg shield are shorter, and therefore the coupling rigidity between the front cover and the leg shield is reduced. As a result, when the moment force from the front end of the front cover, produced by the vibration in the up-down direction due to the traveling of the vehicle, is transmitted to the upper edge portion of the front cover, the coupling between the upper edge portion of the front cover and the upper edge portion of the leg shield cannot be maintained sufficiently, and there is a fear that relative shifting in the up-down direction between the front cover and the leg shield will occur. In order to suppress the relative shifting in the up-down direction between the front cover and the leg shield caused by vibration of the front cover due to the traveling of the straddled vehicle, the straddled vehicle of the present teaching uses the left side reinforcement cover and the right side reinforcement cover as reinforcement covers, and the left side reinforcement cover and the right side reinforcement cover are attached separately further to the outside in the vehicle width direction than the upper portion positioned above the virtual horizontal line that passes through the sitting surface of the seat as seen in the side view of the vehicle. The left side reinforcement cover is arranged further to the outside in the vehicle width direction than the front cover upper left portion and the leg shield upper left portion as seen in the front view of the vehicle, and at least a portion of the left side reinforcement cover overlaps the boundary that adjoins the front cover and the leg shield as seen in the left side view of the vehicle. The right side reinforcement cover is arranged further to the outside in the vehicle width direction than the front cover upper right portion and the leg shield upper right portion as seen in the front view of the vehicle, and at least a portion of the right side reinforcement cover overlaps the boundary that adjoins the front cover and the leg shield as seen in the right side view of the vehicle.

That is, the left side reinforcement cover and the right side reinforcement cover which are reinforcement covers respectively have front ends connected to the front cover as seen in the side view of the vehicle, extend rearward from the front end while straddling the boundary that adjoins the front cover and the leg shield, and are attached to the front cover so as to connect to the leg shield. As a result, the rigidity between the front cover and the leg shield can be reinforced. In addition, the respective shapes of the left side reinforcement cover and the right side reinforcement cover are convex shapes that protrude to the outside, and therefore the traveling wind can be prevented from blowing directly onto the knees of the driver. As a result, the reduction in the comfort of the knees of the driver can be suppressed.

Furthermore, by shaping the left side reinforcement cover and the right side reinforcement cover in a convex shape, the rigidity of the reinforcement covers is improved. If the rigidity of the reinforcement covers is improved, the coupling rigidity between the front cover and the leg shield can be further reinforced. As a result, the convex portions of the reinforcement covers are arranged in a manner of overlapping the boundary that adjoins the front cover and the leg shield as seen in the side view of the vehicle. That is, at least a portion of the left side reinforcement cover protrudes further to the outside in the vehicle width direction than the boundary that adjoins the front cover and the leg shield as seen in the plan view of the vehicle and overlaps the boundary as seen in the left side view of the vehicle. In addition, at least a portion of the right side reinforcement cover protrudes further to the outside in the vehicle width direction than the boundary that adjoins the front cover and the leg shield as seen in the plan view of the vehicle and overlaps the boundary as seen in the right side view of the vehicle.

As a result, the reduction in the comfort of the knees of the driver can be suppressed. Moreover, because the coupling rigidity between the front cover and the leg shield can be sufficiently reinforced and ensured, the relative shifting in the up-down direction between the front cover and the leg shield can be suppressed.

Furthermore, in the left side reinforcement cover and the right side reinforcement cover, when the portions further to the front of the vehicle than the boundary are set as the front portions (right side reinforcement cover right front portion, left side reinforcement cover left front portion) and the portions further to the rear of the vehicle than the boundary are set as the rear portions (right side reinforcement cover right rear portion, left side reinforcement cover left rear portion) in relation to the boundary that adjoins the front cover and the leg shield, the front portions of the reinforcement covers are longer than the rear portions in the vehicle front-back direction.

As indicated above, because the distance of the front cover is long from the front end thereof to the upper edge portion that is coupled to the upper edge portion of the leg shield, the force (moment) applied to the upper edge portion of the front cover is large when vibration in the up-down direction of the front cover occurs due to the traveling of the vehicle. Therefore, by making the front portions of the left side reinforcement cover and the right side reinforcement cover which are the reinforcement covers longer than the rear portions in the vehicle front-back direction, vibration of the front cover can be sufficiently suppressed by the front portions of the reinforcement covers. As a result, the relative shifting in the up-down direction between the front cover and the leg shield caused by the vibration of the front cover due to the traveling of the straddled vehicle can be sufficiently suppressed.

In addition, the rear portions of the reinforcement covers among the left side reinforcement cover and the right side reinforcement cover are longer than the front portions in the vehicle up-down direction as seen in the side view of the vehicle. As a result, the attachment surface area of the rear portions of the reinforcement covers can be sufficiently ensured in the up-down direction even if the rear portions of the reinforcement covers do not extend to the rear. Consequently, the attachment rigidity of the reinforcement covers themselves can be ensured and therefore the attachment strength can be sufficiently ensured. As a result, because the attachment strength of the reinforcement covers can be sufficiently ensured even if the knees of the driver come into contact with the reinforcement covers, the reinforcement covers can be firmly attached and the attachment strength can be further ensured. Accordingly, because the attachment strength of the reinforcement cover can be sufficiently ensured, the relative shifting in the up-down direction between the front cover and the leg shield can be suppressed further.

In this way, a straddled vehicle can be provided that resolves the issue of ensuring the coupling rigidity between the front cover and the leg shield and suppressing the relative shifting in the up-down direction between the front cover and the leg shield, and the issue of suppressing the reduction in comfort for the knees of the driver at the same time.

In the straddled vehicle of the present teaching, the upper edge of the left side reinforcement cover left rear portion is preferably formed in a manner of extending forward and upward of the vehicle, and the upper edge of the left side reinforcement cover left front portion is preferably formed in a manner of extending forward and downward of the vehicle from the front end of the upper edge of the left side reinforcement cover left rear portion, as seen in the left side view of the vehicle. The upper edge of the right side reinforcement cover right rear portion is preferably formed in a manner of extending forward and upward of the vehicle, and the upper edge of the right side reinforcement cover right front portion is preferably formed in a manner of extending forward and downward of the vehicle from the front end of the upper edge of the right side reinforcement cover right rear portion, as seen in the right side view of the vehicle.

In this case, the left side reinforcement cover left front portion is formed in a manner of extending forward and downward of the vehicle from the upper end of the left side reinforcement cover as seen in the left side view of the vehicle, and the right side reinforcement cover right front portion is formed in a manner of extending forward and downward of the vehicle from the front end of the upper edge of the right side reinforcement cover right rear portion as seen in the right side view of the vehicle. As a result, the left side reinforcement cover left front portion and the right side reinforcement cover right front portion can both be largely formed forward and downward of the vehicle, whereby vibration of the front cover can be further suppressed by the left side reinforcement cover left front portion and the right side reinforcement cover right front portion. Consequently, the relative shifting in the up-down direction between the front cover and the leg shield caused by the vibration of the front cover due to the traveling of the straddled vehicle can be further suppressed.

In the straddled vehicle of the present teaching, a ridgeline that adjoins the left side reinforcement cover left front portion and the left side reinforcement cover left rear portion preferably has its upper end adjacent to the boundary and matches the boundary in the front-back direction as seen in the left side view of the vehicle. A ridgeline that adjoins the right side reinforcement cover right front portion and the right side reinforcement cover right rear portion preferably has its upper end adjacent to the boundary and matches the boundary in the front-back direction as seen in the right side view of the vehicle.

In this case, the upper end of the ridgeline that adjoins the left side reinforcement cover left front portion and the left side reinforcement cover left rear portion adjoins the boundary, whereby the left side reinforcement cover left front portion is formed in a manner of extending forward and downward of the vehicle from the upper end of the left side reinforcement cover as seen in the left side view of the vehicle. The upper end of the ridgeline that adjoins the right side reinforcement cover right front portion and the right side reinforcement cover right rear portion adjoins the boundary, whereby the right side reinforcement cover right front portion is formed in a manner of extending forward and downward of the vehicle from the upper end of the right side reinforcement cover right front portion as seen in the right side view of the vehicle. As a result, the left side reinforcement cover left front portion and the right side reinforcement cover right front portion can both be largely formed forward and downward of the vehicle, whereby vibration of the front cover can be further suppressed by the left side reinforcement cover left front portion and the right side reinforcement cover right front portion. Consequently, the relative shifting in the up-down direction between the front cover and the leg shield caused by the vibration of the front cover due to the traveling of the straddled vehicle can be further suppressed.

In the straddled vehicle of the present teaching, a portion of the left side reinforcement cover left rear portion positioned below a rear end of the lower edge of the left side reinforcement cover left front portion, as seen in the rear view of the vehicle, is preferably arranged further to the inside in the vehicle width direction than the left side reinforcement cover left front portion. A portion of the right side reinforcement cover right rear portion positioned below a rear end of the lower edge of the right side reinforcement cover right front portion, as seen in the rear view of the vehicle, is preferably arranged further to the inside in the vehicle width direction than the right side reinforcement cover right front portion.

In this case, the portion of the left side reinforcement cover left rear portion positioned below the rear end of the lower edge of the left side reinforcement cover left front portion and the portion of the right side reinforcement cover right rear portion positioned below the rear end of the lower edge of the right side reinforcement cover right front portion are both recessed toward the inside in the vehicle width direction, whereby the knees are less likely to come into contact with the left side reinforcement cover and the right side reinforcement cover. Accordingly, because the attachment surface area of the reinforcement cover can be sufficiently ensured in the up-down direction whereby the attachment strength of the reinforcement covers themselves can be sufficiently ensured, the relative shifting in the up-down direction between the front cover and the leg shield can be suppressed further. In addition, the relative shifting in the up-down direction between the front cover and the leg shield caused by contact with the knees of the driver can be suppressed, and the reduction in comfort of the knees of the driver can be further suppressed.

In the straddled vehicle of the present teaching, the front cover upper left portion preferably includes a upper left portion first coupling portion that extends outward in the vehicle width direction as seen in the front view, and a upper left portion second coupling portion that extends downward in the vehicle up-down direction from an outer end portion in the vehicle width direction of the upper left portion first coupling portion as seen in the front view. The front cover lower left portion preferably includes a lower left portion first coupling portion that extends further to the outside in the vehicle width direction than a lower end portion of the upper left portion second coupling portion as seen in the front view, and a lower left portion second coupling portion that extends downward in the vehicle up-down direction from an outer end portion of the lower left portion first coupling portion as seen in the front view. The front cover upper right portion preferably includes a upper right portion first coupling portion that extends outward in the vehicle width direction as seen in the front view, and a upper right portion second coupling portion that extends downward in the vehicle up-down direction from an outer end portion in the vehicle width direction of the upper right portion first coupling portion as seen in the front view. The front cover lower right portion preferably includes a lower right portion first coupling portion that extends further to the outside in the vehicle width direction than a lower end portion of the upper right portion second coupling portion as seen in the front view, and a lower right portion second coupling portion that extends downward in the vehicle up-down direction from an outer end portion of the lower right portion first coupling portion as seen in the front view.

In this case, the front cover upper left portion has a stepped shape that is recessed further to the inside in the vehicle width direction than the lower left portion second coupling portion as seen in the front view of the vehicle, and the front cover upper right portion has a stepped shape that is recessed further to the inside in the vehicle width direction than the lower end portion of the lower right portion second coupling portion. As a result, the knees are further less likely to come into contact with the left side reinforcement cover and the right side reinforcement cover, and the reduction in the comfort of the knees of the driver can be further suppressed. In addition, the rigidity of the front cover unit itself can be improved and vibration of the front cover can be suppressed in comparison to a shape that is not stepped as seen in the front view of the vehicle. Consequently, the relative shifting in the up-down direction between the front cover and the leg shield caused by the vibration of the front cover due to the traveling of the straddled vehicle can be even further suppressed.

In the straddled vehicle of the present teaching, the outer end portion in the vehicle width of the left side reinforcement cover as seen in the plan view of the vehicle preferably is adjacent to the outer end portion in the vehicle width direction of the front cover lower left portion in the vehicle width direction, and does not protrude further to the outside in the vehicle width direction than the outer end portion in the vehicle width direction of the front cover lower left portion. The outer end portion in the vehicle width of the right side reinforcement cover as seen in the plan view of the vehicle preferably is adjacent to the outer end portion in the vehicle width direction of the front cover lower right portion in the vehicle width direction, and does not protrude further to the outside in the vehicle width direction than the outer end portion in the vehicle width direction of the front cover lower right portion.

In this case, both the left side reinforcement cover and the right side reinforcement cover can be formed in a manner of protruding greatly to the outside in the vehicle width direction, whereby the respective rigidities of the left side reinforcement cover itself and the right side reinforcement cover itself can be further increased. Consequently, the relative shifting in the up-down direction between the front cover and the leg shield caused by the vibration of the front cover due to the traveling of the straddled vehicle can be further suppressed because the coupling rigidity between the front cover and the leg shield can be further ensured.

In the straddled vehicle of the present teaching, at least a portion of the left side reinforcement cover left front portion is preferably positioned below the virtual horizontal line as seen in the left side view of the vehicle. At least a portion of the right side reinforcement cover right front portion is preferably positioned below the virtual horizontal line as seen in the right side view of the vehicle.

As a result, both the left side reinforcement cover left front portion and the right side reinforcement cover right front portion can be formed in a comparatively large size forward and downward of the vehicle, whereby vibration of the front cover can be further suppressed by the left side reinforcement cover left front portion and the right side reinforcement cover right front portion. Consequently, the relative shifting in the up-down direction between the front cover and the leg shield caused by the vibration of the front cover due to the traveling of the straddled vehicle can be further suppressed.

In the straddled vehicle of the present teaching, the left side reinforcement cover left front portion is preferably formed in a manner of protruding outward in the vehicle width direction from the front cover upper left portion as seen in the front view of the vehicle. The right side reinforcement cover right front portion is preferably formed in a manner of protruding outward in the vehicle width direction from the front cover upper right portion as seen in the front view of the vehicle.

In this case, both the left side reinforcement cover and the right side reinforcement cover can be formed in a manner of protruding outward in the vehicle width direction, whereby the respective rigidities of the left side reinforcement cover itself and the right side reinforcement cover itself can be further increased. Consequently, the relative shifting in the up-down direction between the front cover and the leg shield caused by the vibration of the front cover due to the traveling of the straddled vehicle can be further suppressed because the coupling rigidity between the front cover and the leg shield can be further ensured.

In the straddled vehicle of the present teaching, a headlight is preferably arranged on the front cover. At least a portion of the headlight is positioned below the virtual horizontal line as seen in the side view of the vehicle. The left side reinforcement cover left front portion extends forward and downward of the vehicle as seen in the left side view of the vehicle and a front end portion thereof is formed in a manner of overlapping the headlight. The right side reinforcement cover right front portion extends forward and downward of the vehicle as seen in the right side view of the vehicle and a front end portion thereof is formed in a manner of overlapping the headlight.

In this case, at least a portion of the headlight in the front cover is arranged in a position below the virtual horizontal line as seen in the side view of the vehicle, whereby the center of gravity of the front cover unit is biased toward the lower side thereof. Conversely in this case, both the left side reinforcement cover left front portion and the right side reinforcement cover right front portion extend forward and downward of the vehicle, and the front end portions thereof are formed in a manner of overlapping the headlight. As a result, the left side reinforcement cover left front portion and the right side reinforcement cover right front portion can both be largely formed forward and downward of the vehicle. Consequently, even if the center of gravity of the front cover unit is biased toward the lower side thereof, vibration of the front cover can be sufficiently suppressed by the left side reinforcement cover left front portion and the right side reinforcement cover right front portion. Consequently, the relative shifting in the up-down direction between the front cover and the leg shield caused by the vibration of the front cover due to the traveling of the straddled vehicle can be further suppressed because the coupling rigidity between the front cover and the leg shield can be further ensured.

### Brief Description of Drawings

FIG. 1 is a vehicle left side view of a straddled vehicle 1 while a driver is sitting thereon.
FIG. 2 is a vehicle right side view of the straddled vehicle 1.
FIG. 3 is a vehicle plan view of the straddled vehicle 1 with a handle 8 and a handle cover 8A removed.
FIG. 4 is a vehicle front view of the straddled vehicle 1.
FIG. 5 is a vehicle rear view at a position in front of a footboard portion 13 of the straddled vehicle 1.
FIG. 6 is a vehicle left side view of the straddled vehicle 1 while a driver is sitting thereon with a left side reinforcement cover 15 and a right side reinforcement cover 16 removed.
FIG. 7 is a vehicle right side view of the straddled vehicle 1 with the left side reinforcement cover 15 and the right side reinforcement cover 16 removed.
FIG. 8 is a vehicle plan view of the straddled vehicle 1 with the handle 8, the handle cover 8A, the left side reinforcement cover 15, and the right side reinforcement cover 16 removed.
FIG. 9 is a vehicle front view of the straddled vehicle 1 with the left side reinforcement cover 15 and the right side reinforcement cover 16 removed.
FIG. 10 is a vehicle rear view at a position in front of the footboard portion 13 of the straddled vehicle 1 with the left side reinforcement cover 15 and the right side reinforcement cover 16 removed.
FIG. 11(a) is a vehicle left side view of the left side reinforcement cover 15.
FIG. 11(b) is a vehicle plan view of the left side reinforcement cover 15.
FIG. 11(c) is a vehicle front view of the left side reinforcement cover 15.
FIG. 11(d) is a vehicle rear view of the left side reinforcement cover 15.
FIG. 12(a) is a vehicle right side view of the right side reinforcement cover 16.
FIG. 12(b) is a vehicle plan view of the right side reinforcement cover 16.
FIG. 12(c) is a vehicle front view of the right side reinforcement cover 16.
FIG. 12(d) is a vehicle rear view of the right side reinforcement cover 16.
FIG. 13(a) is a cross-sectional view along line A-A in FIG 1.
FIG. 13(b) is a cross-sectional view along line B-B in FIG 1.
FIG. 14(a) is a cross-sectional view along line A-A in FIG 2.
FIG. 14(b) is a cross-sectional view along line B-B in FIG 2.

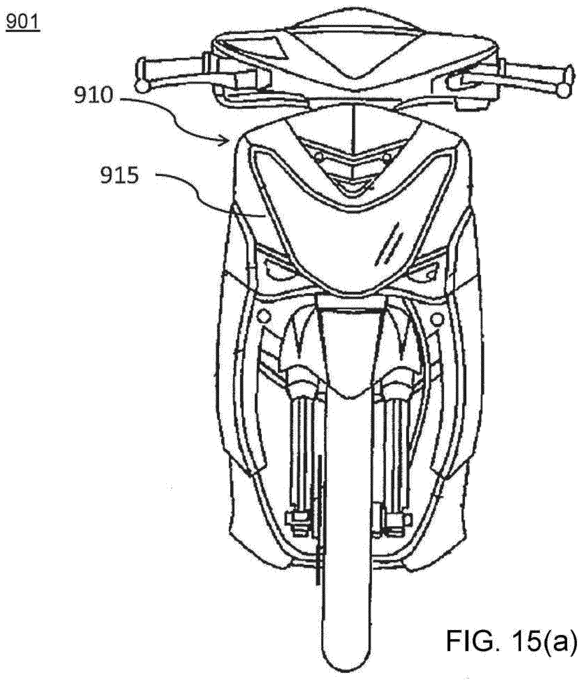

FIG. 15(a) is a vehicle front view of a straddled vehicle 901 described in JP 2007-283927 A.

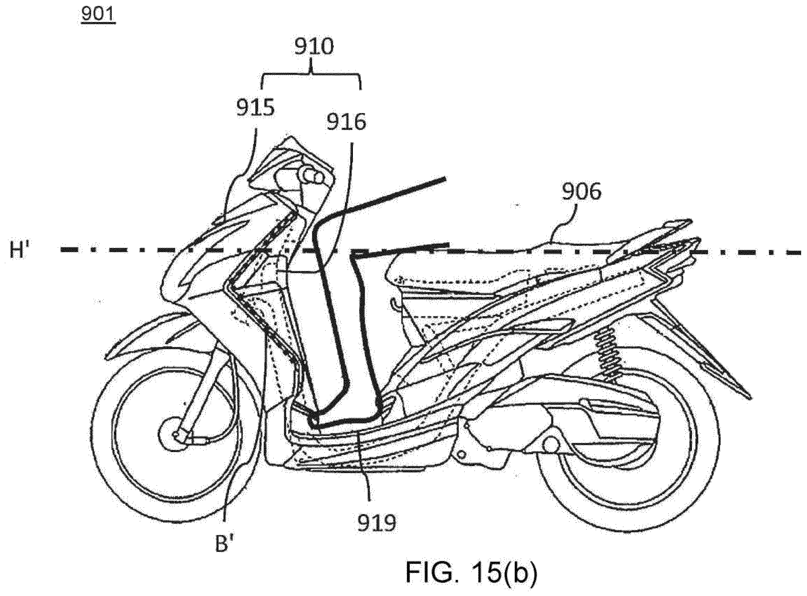

FIG. 15(b) is a vehicle left side view of the straddled vehicle 901 described in JP 2007-283927 A.

### Description of Embodiments

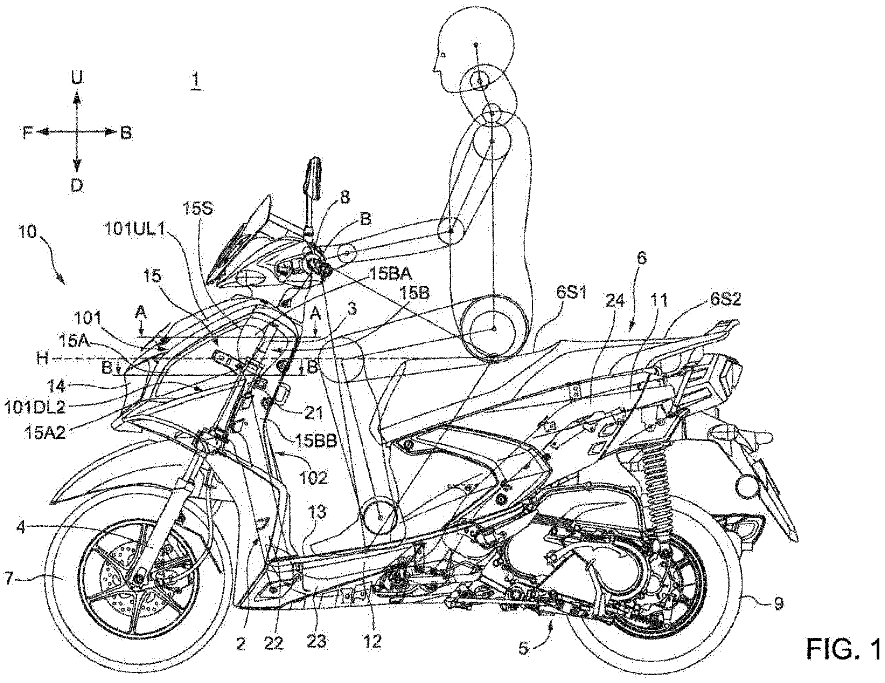

The embodiments described hereinbelow will be explained with reference to the drawings. As illustrated in FIG. 1, the straddled vehicle 1 applicable to the present embodiment is a scooter type vehicle. Alternatively, the straddled vehicle may be another type of straddled vehicle. Alternatively, the straddled vehicle may be a motorized three-wheel vehicle.

In the following explanation, forward, rearward, leftward, and rightward respectively signify toward the front, toward the rear, toward the left, and toward the right as seen from a passenger sitting on the straddled vehicle 1. The front-back direction is the same as the vehicle front-back direction, the up-down direction is the same as the vehicle up-down direction and the left-right direction is the same as the vehicle left-right direction. In addition, the F-direction arrows and the B-direction arrows in the drawings respectively represent the forward direction and the rearward direction, the U-direction arrows and the D-direction arrows respectively represent the upward direction and the downward direction, and the L-direction arrows and the R-direction arrows respectively represent the leftward direction and the rightward direction.

Furthermore, in the following explanation, "front cover upper left portion", "front cover upper left portion first coupling portion", and "front cover upper left portion second coupling portion" respectively signify "the upper left portion of the front cover", "the first coupling portion of the upper left portion of the front cover", and "the second coupling portion of the upper left portion of the front cover".

In addition," front cover upper right portion", " front cover upper right portion first coupling portion", " front cover upper right portion second coupling portion" respectively signify " the upper right portion of the front cover ", " the first coupling portion of the upper right portion of the front cover ", and " the second coupling portion of the upper right portion of the front cover".

In addition," front cover lower left portion", " front cover lower left portion first coupling portion", " front cover lower left portion second coupling portion", and " front cover lower left portion third coupling portion" respectively signify" the lower left portion of the front cover", " the first coupling portion of the lower left portion of the front cover", " the second coupling portion of the lower left portion of the front cover", and " the third coupling portion of the lower left portion of the front cover".

In addition," front cover lower right portion", " front cover lower right portion first coupling portion", " front cover lower right portion second coupling portion", and " front cover lower right portion third coupling portion" respectively signify " the lower right portion of the front cover", " the first coupling portion of the lower right portion of the front cover", " the second coupling portion of the lower right portion of the front cover", and " the third coupling portion of the lower right portion of the front cover".

Furthermore, in the following explanation, " leg shield upper left portion", " leg shield upper left portion first coupling portion", and " leg shield upper left portion second coupling portion", respectively signify " the upper left portion of the leg shield", " the first coupling portion of the upper left portion of the leg shield", and " the second coupling portion of the upper left portion of the leg shield".

In addition," leg shield lower left portion", " left side surface of leg shield lower left portion", "leg shield lower left portion first coupling portion", "leg shield lower left portion second coupling portion", and "leg shield lower left portion third coupling portion", respectively signify " the lower left portion of the leg shield ", " the left side surface of the lower left portion of the leg shield ", " the first coupling portion of the lower left portion of the leg shield", "the second coupling portion of the lower left portion of the leg shield", and "the third coupling portion of the lower left portion of the leg shield".

In addition," leg shield upper right portion", " leg shield upper right portion first coupling portion", and " leg shield upper right portion second coupling portion", respectively signify " the upper right portion of the leg shield", " the first coupling portion of the upper right portion of the leg shield", and " the second coupling portion of the upper right portion of the leg shield".

In addition," leg shield lower right portion", " right side surface of leg shield lower right portion", "leg shield lower right portion first coupling portion", "leg shield lower right portion second coupling portion", and "leg shield lower right portion third coupling portion", respectively signify " the lower right portion of the leg shield ", " the right side surface of the lower right portion of the leg shield ", " the first coupling portion of the lower right portion of the leg shield", "the second coupling portion of the lower right portion of the leg shield", and "the third coupling portion of the lower right portion of the leg shield".

### (Overall vehicle)

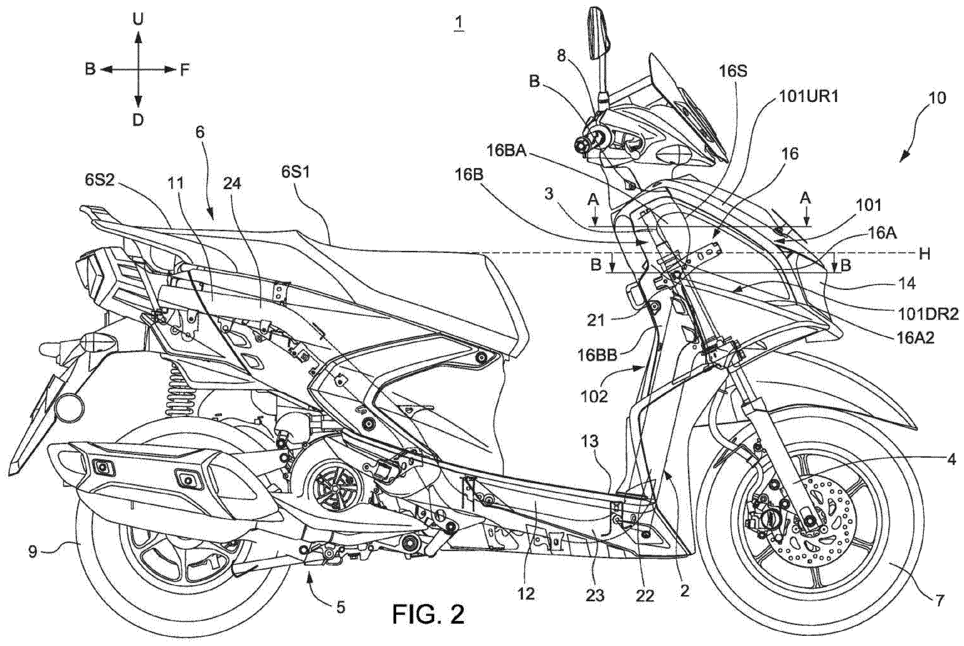

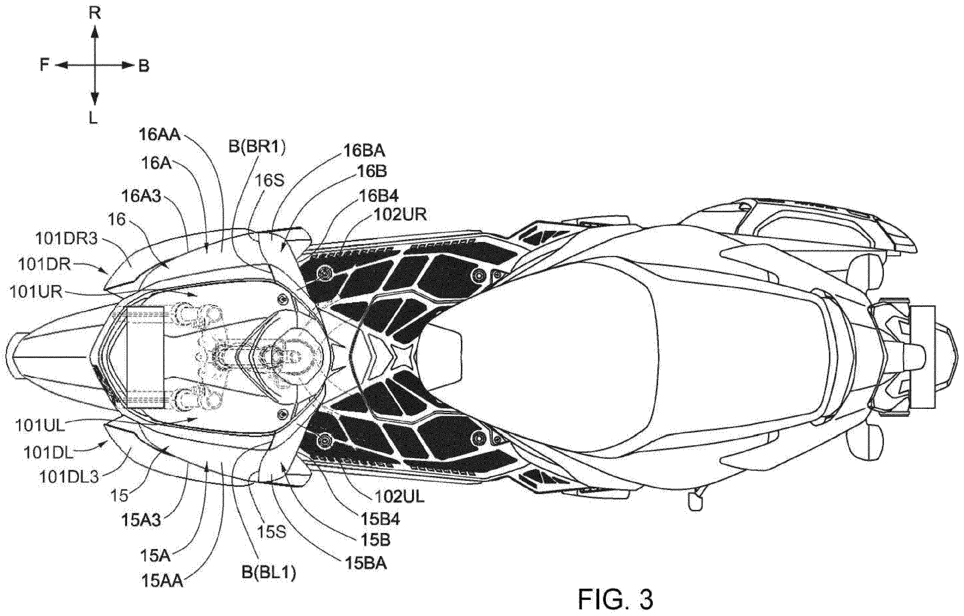

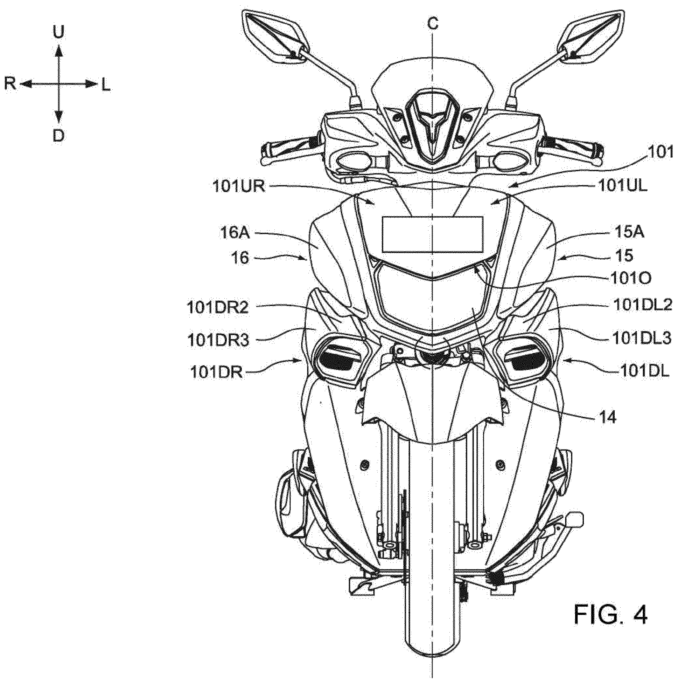

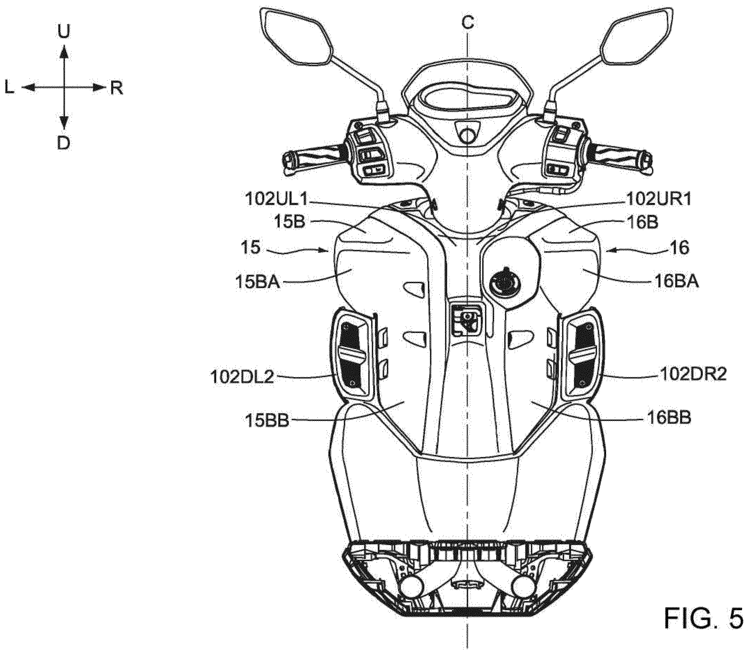

An overall structure of a straddled vehicle 1 of the present embodiment will be explained first with reference to FIG 1-5. FIG. 1 is a vehicle left side view of the straddled vehicle 1 while a driver is sitting thereon. FIG. 2 is a vehicle right side view of the straddled vehicle 1. FIG. 3 is a vehicle plan view of the straddled vehicle 1. FIG. 4 is a vehicle front view of the straddled vehicle 1. FIG. 5 is a vehicle rear view of the straddled vehicle 1. FIG. 1-3 show portions of the vehicle internal structure such as a vehicle frame 2 and a head pipe 21 with dotted lines.

As illustrated in FIG. 1 and 2, the straddled vehicle 1 includes an under-bone type vehicle frame 2. The front end portion of the vehicle frame 2 includes a head pipe 21. More specifically, the vehicle frame 2 includes the head pipe 21, a down frame 22, a lower frame 23, and a rear frame 24.

The head pipe 21 supports a steering shaft 3 rotatably and extends diagonally downward toward the front of the vehicle. A pair of left and right front fork portions 4 are provided to a lower portion of the steering shaft 3. That is, the pair of left and right front fork portions 4 are rotatably supported on the head pipe 21. The head pipe 21 and the steering shaft 3 extend forward and diagonally downward. The pair of left and right front fork portions 4 extend forward and diagonally downward. A front wheel 7 is rotatably supported at the lower end of the pair of left and right front fork portions 4. The upper ends of the front fork portions 4 are attached to the aforementioned steering shaft 3. A handle 8 is arranged at the upper end of the steering shaft 3.

The down frame 22 is connected to the head pipe 21 and extends diagonally downward toward the rear of the vehicle and is arranged further to the rear than the front wheel 7. The lower frame 23 is connected to a lower portion of the down frame 22 and extends toward the rear. The rear frame 24 is connected to a rear portion of the lower frame 23 and extends rearward and upward, and supports a seat 6 from below. The rear frame 24 supports a power unit 5. The seat 6 is arranged above the power unit 5. At a rear end portion of the power unit 5, a rear wheel 9 is rotatably supported at the rear end portion of the power unit 5 and is driven by driving power from the power unit 5.

The seat 6 is arranged further to the rear of the vehicle than the head pipe 21 and includes a sitting surface 6S1 on which the driver sits. The seat 6 includes a sitting surface 6S2 on which a rear seat passenger sits. The sitting surface 6S2 is arranged higher than the sitting surface 6S1.

As illustrated in FIG. 1 and 2, the straddled vehicle 1 includes a front cover unit 10 arranged further to the front than the seat 6. In addition, the straddled vehicle 1 includes a rear cover 11 and a lower cover 12. The straddled vehicle 1 includes a left side reinforcement cover 15 that is formed separately from the front cover unit 10, and a right side reinforcement cover 16 that is formed separately from the front cover unit 10.

As illustrated in FIG. 1 and 2, the front cover unit 10 is configured by a front cover 101 and a leg shield 102. The head pipe 21, the steering shaft 3, and the like are covered from the front by the front cover 101. In addition, the head pipe 21, the steering shaft 3, and the like are covered from the rear by the leg shield 102.

As illustrated in FIG. 1 and 2, the rear cover 11 is arranged below the seat 6 and around a storage box (not shown). The rear cover 11 covers the periphery of the rear frame 24.

The lower cover 12 is provided between the leg shield 102 and the rear cover 11. The lower cover 12 covers the periphery of the lower frame 23. A footboard portion 13 for the driver to place his/her feet is installed on the upper surface of the lower cover 12. The footboard portion 13 is formed in a position below and behind the front cover unit 10 and between the front cover unit 10 and the seat 6. The footboard portion 13 extends rearward in a substantially horizontally from a connecting portion with the lower end of the leg shield 102, and is connected to the lower end of the rear cover 11. As a result, a footrest space that is open to the left and right is formed between the leg shield 102 and the rear cover 11 and above the footboard portion 13 as seen in the side view of the vehicle. Alternatively, the footboard portion 13 may include a center tunnel portion that protrudes upward.

### (Front cover unit 10)

As indicated above, the front cover unit 10 is configured by the front cover 101 and the leg shield 102. More specifically, the front cover unit 10 is arranged in front of the head pipe 21, and includes the front cover 101 formed in a manner of extending forward and downward of the vehicle, and the leg shield 102 that is arranged to the rear of the head pipe 21 and is connected to the front cover 101.

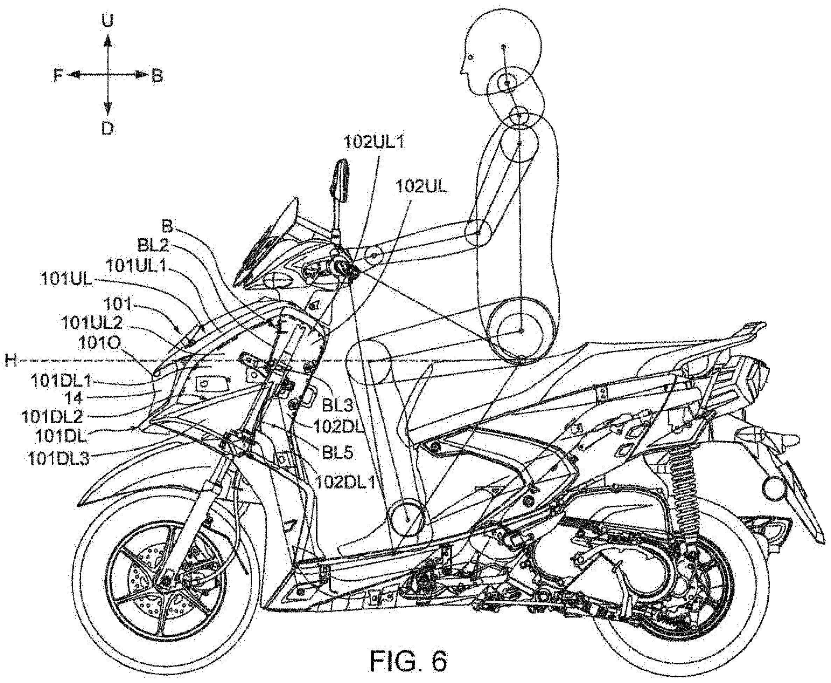

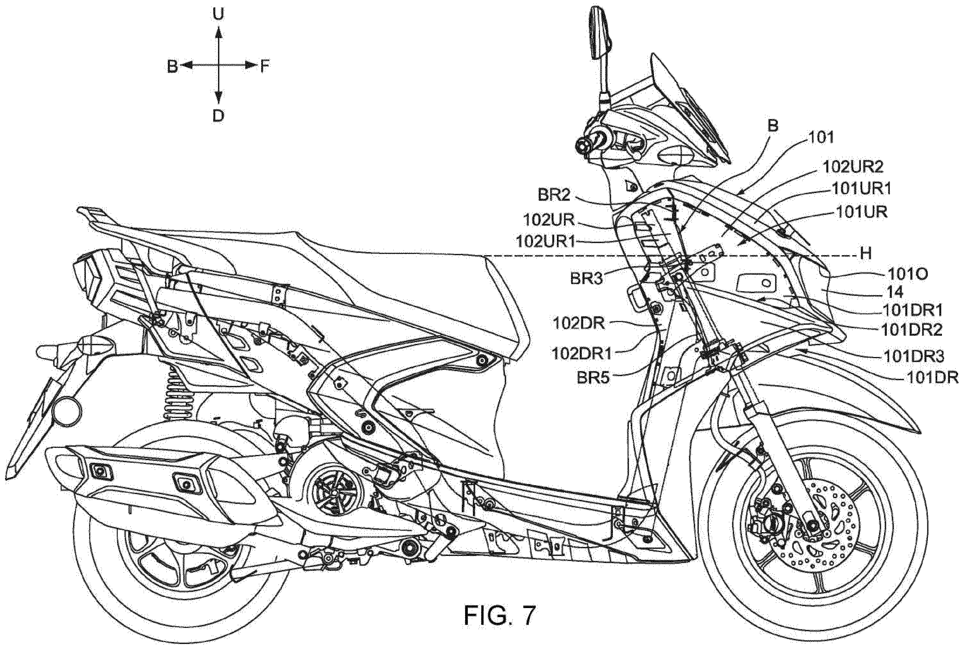

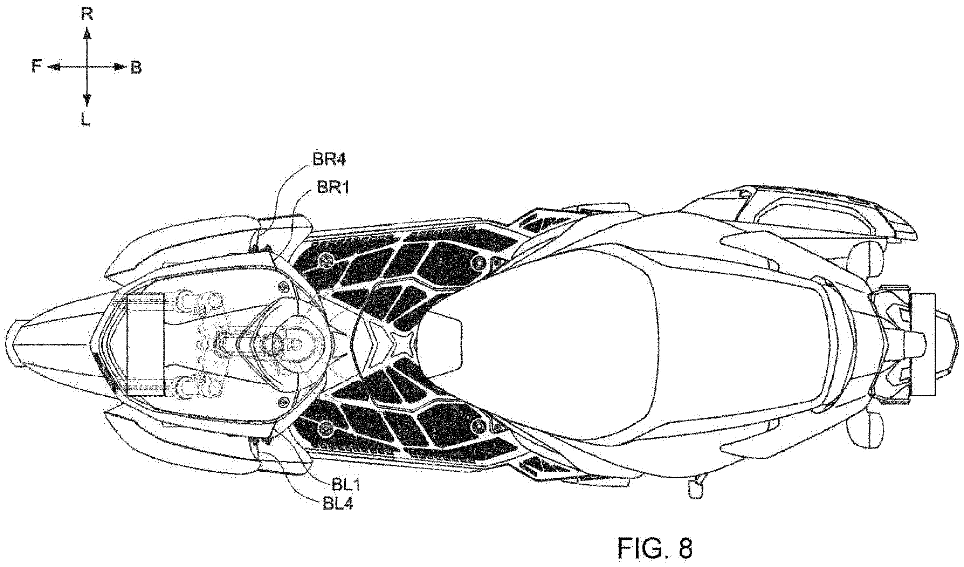

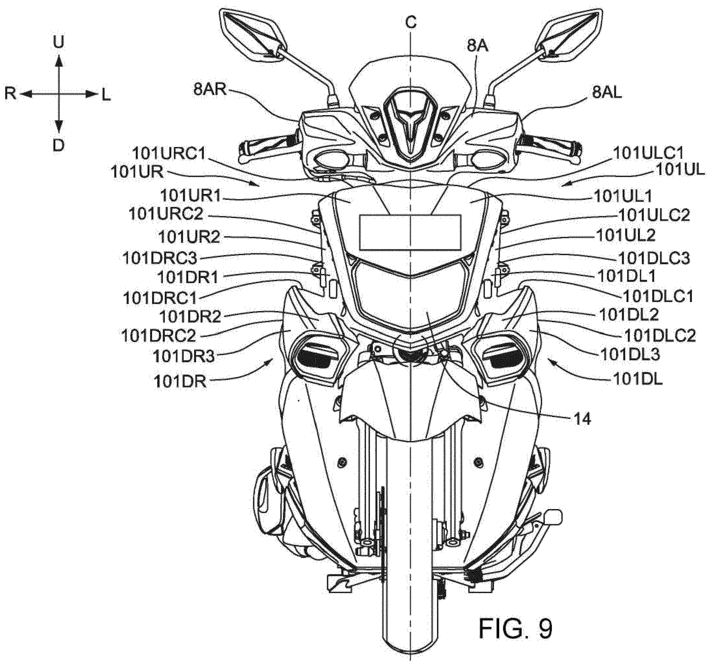

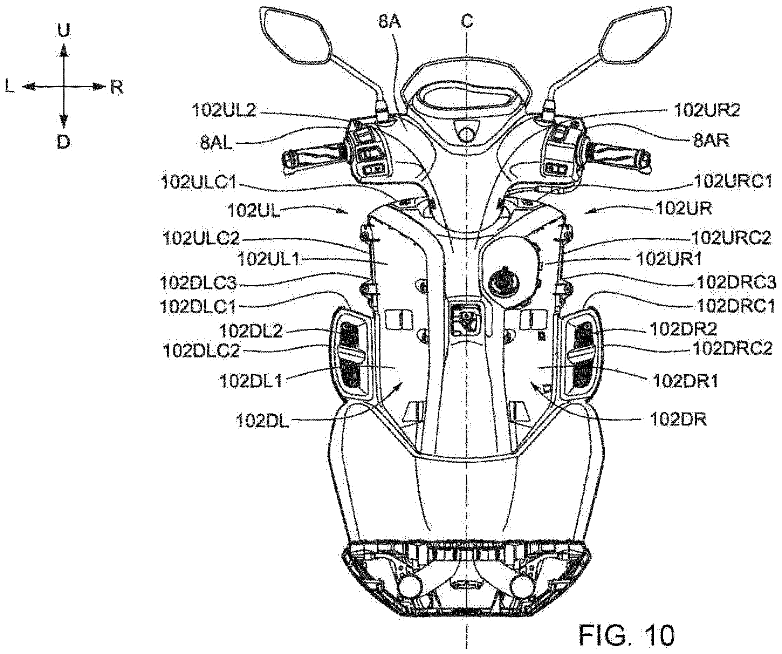

An outline of the structure of the front cover unit 10 of the present embodiment will be explained with reference to FIG. 6-10. FIG. 6 is a vehicle left side view of the straddled vehicle 1 with the left side reinforcement cover 15 and the right side reinforcement cover 16 removed and with the driver sitting on the straddled vehicle 1. FIG. 7 is a vehicle right side view of the straddled vehicle 1 with the left side reinforcement cover 15 and the right side reinforcement cover 16 removed. FIG. 8 is a vehicle plan view of the straddled vehicle 1 with the left side reinforcement cover 15 and the right side reinforcement cover 16 removed. FIG. 9 is a vehicle front view of the straddled vehicle 1 with the left side reinforcement cover 15 and the right side reinforcement cover 16 removed. FIG. 10 is a vehicle rear view of the straddled vehicle 1 with the left side reinforcement cover 15 and the right side reinforcement cover 16 removed. FIG. 6-8 show portions of the vehicle internal structure such as the vehicle frame 2 and the head pipe 21 with dotted lines.

As illustrated in FIG. 6, the front cover 101 includes a front cover upper left portion 101UL that is positioned above a virtual horizontal line H that passes through the sitting surface 6S1 of the seat as seen in the left side view of the vehicle, and a front cover lower left portion 101 DL that is positioned below the virtual horizontal line H as seen in the left side view of the vehicle.

As illustrated in FIG. 7, the front cover 101 includes a front cover upper right portion 101 UR that is positioned above the virtual horizontal line H that passes through the sitting surface 6S1 of the seat as seen in the right side view of the vehicle, and a front cover lower right portion 101 DR that is positioned below the virtual horizontal line H as seen in the right side view of the vehicle.

As illustrated in FIG. 9, the front cover upper left portion 101 UL and the front cover lower left portion 101DL are positioned further to the left in the vehicle left-right direction than a vertical line C that passes through the center in the vehicle left-right direction. The front cover upper right portion 101UR and the front cover lower right portion 101DR are positioned further to the right in the vehicle left-right direction than the vertical line C that passes through the center in the vehicle left-right direction. The front cover upper left portion 101UL includes a first surface 101UL1 of the front cover upper left portion 101UL and a second surface 101UL2 of the front cover upper left portion 101UL. The front cover lower left portion 101DL includes a first surface 101DL1 of the front cover lower left portion 101DL, a second surface 101DL2 of the front cover lower left portion 101DL, and a third surface 101DL3 of the front cover lower left portion 101DL. The front cover upper right portion 101UR includes a first surface 101 UR1 of the front cover upper right portion 101UR and a second surface 101UR2 of the front cover upper right portion 101UR. The front cover lower right portion 101DR includes a first surface 101DR1 of the front cover lower right portion 101DL, a second surface 101 DR2 of the front cover lower right portion 101DL, and a third surface 101DR3 of the front cover lower right portion 101DL.

As illustrated in FIG. 9, the front cover upper left portion 101UL is positioned further to the right in the vehicle left-right direction than a left end portion 8AL of a handle cover 8A that covers the handle 8 as seen in the front view of the vehicle. The front cover upper right portion 101UR is positioned further to the left in the vehicle left-right direction than a right end portion 8AR of the handle cover 8A that covers the handle 8 as seen in the front view of the vehicle. At least a portion of the front cover lower left portion 101DL is positioned further to the left in the vehicle left-right direction than the left end portion 8AL of the handle cover 8A that covers the handle 8 as seen in the front view of the vehicle. At least a portion of the front cover lower right portion 101DR is positioned further to the right in the vehicle left-right direction than the right end portion 8AR of the handle cover 8A that covers the handle 8 as seen in the front view of the vehicle. Specifically, the left edge of the second surface 101UL2 of the front cover upper left portion 101UL is positioned further to the right in the vehicle left-right direction than the left end portion 8AL of the handle cover 8A that covers the handle 8 as seen in the front view of the vehicle. The right edge of the second surface 101UR2 of the front cover upper right portion 101UR is positioned further to the left in the vehicle left-right direction than the right end portion 8AR of the handle cover 8A that covers the handle 8 as seen in the front view of the vehicle. The left edge of the third surface 101DL3 of the front cover lower left portion 101DL is positioned further to the left in the vehicle left-right direction than the left end portion 8AL of the handle cover 8A that covers the handle 8 as seen in the front view of the vehicle. The right edge of the third surface 101DR3 of the front cover lower right portion 101DR is positioned further to the right in the vehicle left-right direction than the right end portion 8AR of the handle cover 8A that covers the handle 8 as seen in the front view of the vehicle.

As illustrated in FIG. 9, the second surface 101UL2 of the front cover upper left portion 101UL is formed in a manner of extending downward in the vehicle up-down direction from the left edge in the vehicle left-right direction of the first surface 101UL1 of the front cover upper left portion 101UL and in a manner of being connected to the first surface 101DL1 of the front cover lower left portion 101DL as seen in the front view. In addition, the first surface 101DL1 of the front cover lower left portion 101DL is formed in a manner of extending downward in the vehicle up-down direction and in a manner of being connected to the right edge in the vehicle left-right direction of the second surface 101DL2 of the front cover lower left portion 101DL as seen in the front view. In addition, the second surface 101DL2 of the front cover lower left portion 101DL is formed in a manner of extending to the left in the vehicle left-right direction from the lower edge of the first surface 101DL1 of the front cover lower left portion 101DL as seen in the front view. In addition, the third surface 101DL3 of the front cover lower left portion 101DL is formed in a manner of extending downward in the vehicle up-down direction from the left edge in the vehicle left-right direction of the second surface 101DL2 of the front cover lower left portion 101DL as seen in the front view.

As illustrated in FIG. 9, the second surface 101UR2 of the front cover upper right portion 101 UR is formed in a manner of extending downward in the vehicle up-down direction from the right edge in the vehicle left-right direction of the first surface 101UR1 of the front cover upper right portion 101UR and in a manner of being connected to the first surface 101 DR1 of the front cover lower right portion 101DR as seen in the front view. In addition, the first surface 101DR1 of the front cover lower right portion 101DR is formed in a manner of extending downward in the vehicle up-down direction and in a manner of being connected to the left edge in the vehicle left-right direction of the second surface 101DR2 of the front cover lower right portion 101DR as seen in the front view. In addition, the second surface 101 DR2 of the front cover lower right portion 101DR is formed in a manner of extending to the right in the vehicle left-right direction from the lower edge of the first surface 101DR1 of the front cover lower right portion 101DR as seen in the front view. In addition, the third surface 101DR3 of the front cover lower right portion 101DR is formed in a manner of extending downward in the vehicle up-down direction from the right edge in the vehicle left-right direction of the second surface 101DR2 of the front cover lower right portion 101DR as seen in the front view.

As illustrated in FIG. 6, the first surface 101UL1 of the front cover upper left portion 101UL is formed in a manner of extending forward and downward as seen in the left side view of the vehicle. The second surface 101DL2 of the front cover lower left portion 101DL is formed in a manner of extending forward and downward as seen in the left side view of the vehicle. The second surface 101UL2 of the front cover upper left portion 101UL is formed in a manner of extending from the lower edge of the first surface 101 UL1 of the front cover upper left portion 101UL to the upper edge of the first surface 101DL1 of the front cover lower left portion 101DL as seen in the left side view.

As illustrated in FIG. 7, the first surface 101UR1 of the front cover upper right portion 101UR is formed in a manner of extending forward and downward. The second surface 101DR2 of the front cover lower right portion 101DR is formed in a manner of extending forward and downward as seen in the right side view of the vehicle. The second surface 101UR2 of the front cover upper right portion 101UR is formed in a manner of extending from the lower edge of the first surface 101UR1 of the front cover upper right portion 101UR to the upper edge of the first surface 101DR1 of the front cover lower right portion 101DR as seen in the right side view.

As illustrated in FIG. 4, the front cover 101 includes an opening 101O in a lower portion thereof. A headlight 14 is provided in the opening 101O of the front cover 101. As illustrated in FIG. 6 and 7, almost the entirety of the opening 101O of the front cover 101 is positioned below the virtual horizontal line H.

As illustrated in FIG. 6, the leg shield 102 includes a leg shield upper left portion 102UL that is positioned above the virtual horizontal line H that passes through the sitting surface 6S1 of the seat as seen in the left side view of the vehicle, and a leg shield lower left portion 102DL that is positioned below the virtual horizontal line H that passes through the sitting surface 6S1 of the seat as seen in the left side view of the vehicle.

As illustrated in FIG. 7, the leg shield 102 includes a leg shield upper right portion 102UR that is positioned above the virtual horizontal line H that passes through the sitting surface 6S1 of the seat as seen in the right side view of the vehicle, and a leg shield lower right portion 102DR that is positioned below the virtual horizontal line H that passes through the sitting surface 6S1 of the seat as seen in the right side view of the vehicle.

As illustrated in FIG. 10, the leg shield upper left portion 102UL and the leg shield lower left portion 102DL are positioned further to the left in the vehicle left-right direction than the vertical line C that passes through the center in the vehicle left-right direction. The leg shield upper right portion 102UR and the leg shield lower right portion 102DR are positioned further to the right in the vehicle left-right direction than the vertical line C that passes through the center in the vehicle left-right direction. The leg shield upper left portion 102UL is positioned further to the right in the vehicle left-right direction than the left end portion 8AL of the handle cover 8A that covers the handle 8. The leg shield upper right portion 102UR is positioned further to the left in the vehicle left-right direction than the right end portion 8AR of the handle cover 8A that covers the handle 8.

As illustrated in FIG. 10, the leg shield upper left portion 102UL includes a first surface 102UL1 and a second surface 102UL2. The leg shield upper right portion 102UR includes a first surface 102UR1 and a second surface 102UR2. As illustrated in FIG. 6 and 10, the first surface 102UL1 of the leg shield upper left portion 102UL is formed in a manner of extending to the left of the vehicle from the rear toward the front. The upper edge and the right edge of the first surface 102UL1 of the leg shield upper left portion 102UL are connected to the second surface 102UL2 of the leg shield upper left portion 102UL. As illustrated in FIG. 7 and 10, the first surface 102UR1 of the leg shield upper right portion 102UR is formed in a manner of extending to the right of the vehicle from the rear toward the front. The upper edge and the left edge of the first surface 102UR1 of the leg shield upper right portion 102UR are connected to the second surface 102UR2 of the leg shield upper right portion 102UR. The left edge of the first surface 102UL1 of the leg shield upper left portion 102UL is positioned further to the right in the vehicle left-right direction than the left end portion 8AL of the handle cover 8A that covers the handle 8. The right edge of the first surface 102UR1 of the leg shield upper right portion 102UR is positioned further to the left in the vehicle left-right direction than the right end portion 8AR of the handle cover 8A that covers the handle 8.

As illustrated in FIG. 10, the leg shield lower left portion 102DL includes a left side surface 102DL1. The leg shield lower right portion 102DR includes a right side surface 102DR1.

As illustrated in FIG. 6 and 10, the left side surface 102DL1 of the leg shield lower left portion 102DL is formed in a manner of extending to the left of the vehicle from the rear toward the front. The upper edge of the left side surface 102DL1 of the leg shield lower left portion 102DL is connected to the first surface 102UL1 of the leg shield upper left portion 102UL. A left fitting portion 102DL2 that protrudes toward the left of the vehicle is provided at a left edge portion of the left side surface 102DL1 of the leg shield lower left portion 102DL as seen in the rear view.

As illustrated in FIG. 7 and 10, the right side surface 102DR1 of the leg shield lower right portion 102DR is formed in a manner of extending to the right of the vehicle from the rear toward the front. The upper edge of the right side surface 102DR1 of the leg shield lower right portion 102DR is connected to the first surface 102UR1 of the leg shield upper right portion 102UR. A right fitting portion 102DR2 that protrudes toward the right of the vehicle is provided at a right edge portion of the right side surface 102DR1 of the leg shield lower right portion 102DR as seen in the rear view.

As illustrated in FIG. 9, the front cover upper left portion 101UL includes a front cover upper left portion first coupling portion 101ULC1 and a front cover upper left portion second coupling portion 101ULC2. More specifically, the front cover upper left portion first coupling portion 101ULC1 is a rear edge portion of the first surface 101UL1 of the front cover upper left portion 101UL and extends outward in the vehicle width direction as seen in the front view. The front cover upper left portion second coupling portion 101ULC2 is a rear edge portion of the second surface 101UL2 of the front cover upper left portion 101UL and extends downward in the vehicle up-down direction from an outer end portion in the vehicle width direction of the front cover upper left portion first coupling portion 101ULC1 as seen in the front view.

As illustrated in FIG. 9, the front cover upper right portion 101UR includes a front cover upper right portion first coupling portion 101URC1 and a front cover upper right portion second coupling portion 101URC2. More specifically, the front cover upper right portion first coupling portion 101URC1 is a rear edge portion of the first surface 101UR1 of the front cover upper right portion 101UR and extends outward in the vehicle width direction as seen in the front view. The front cover upper right portion second coupling portion 101URC2 is a rear edge portion of the second surface 101UL2 of the front cover upper right portion 101UR and extends downward in the vehicle up-down direction from an outer end portion in the vehicle width direction of the front cover upper right portion first coupling portion 101URC1 as seen in the front view.

As illustrated in FIG. 9, the front cover lower left portion 101DL includes a front cover lower left portion first coupling portion 101DLC1 and a front cover lower left portion second coupling portion 101DLC2. In addition, the front cover lower left portion 101DL further includes a front cover lower left portion third coupling portion 101 DLC3. More specifically, the front cover lower left portion third coupling portion 101DLC3 is a rear edge portion of the first surface 101 DL1 of the front cover lower left portion 101DL, and extends downward in the vehicle up-down direction from a lower end portion of the front cover upper left portion second coupling portion 101ULC2 as seen in the front view. The front cover lower left portion first coupling portion 101DLC1 is a rear edge portion of the second surface 101DL2 of the front cover lower left portion 101DL, and extends further to the outside in the vehicle width direction than the lower end portion of the front cover upper left portion second coupling portion 101ULC2 as seen in the front view. In addition, the front cover lower left portion first coupling portion 101DLC1 extends outward in the vehicle width direction from the lower end portion of the front cover lower left portion third coupling portion 101DLC3 as seen in the front view. The front cover lower left portion second coupling portion 101DLC2 is a rear edge portion of the third surface 101DL3 of the front cover lower left portion 101DL and extends downward in the vehicle up-down direction from an outer end portion in the vehicle width direction of the front cover lower left portion first coupling portion 101DLC1 as seen in the front view.

As illustrated in FIG. 9, the front cover lower right portion 101DR includes a front cover lower right portion first coupling portion 101DRC1 and a front cover lower right portion second coupling portion 101DRC2. In addition, the front cover lower right portion 101DR further includes a front cover lower right portion third coupling portion 101DRC3. More specifically, the front cover lower right portion third coupling portion 101DRC3 is a rear edge portion of the first surface 101DR1 of the front cover lower right portion 101DR, and extends downward in the vehicle up-down direction from a lower end portion of the front cover upper right portion second coupling portion 101URC2 as seen in the front view. The front cover lower right portion first coupling portion 101DRC1 is a rear edge portion of the second surface 101 DR2 of the front cover lower right portion 101DR, and extends further to the outside in the vehicle width direction than the lower end portion of the front cover upper right portion second coupling portion 101URC2 as seen in the front view. In addition, the front cover lower right portion first coupling portion 101DRC1 extends outward in the vehicle width direction from the lower end portion of the front cover lower right portion third coupling portion 101 DRC3 as seen in the front view. The front cover lower right portion second coupling portion 101DRC2 is a rear edge portion of the third surface 101DL3 of the front cover lower left portion 101DL and extends downward in the vehicle up-down direction from an outer edge portion in the vehicle width direction of the front cover lower right portion first coupling portion 101DRC1 as seen in the front view.

As illustrated in FIG. 10, the leg shield upper left portion 102UL includes a leg shield upper left portion first coupling portion 102ULC1 and a leg shield upper left portion second coupling portion 102ULC2. More specifically, the leg shield upper left portion first coupling portion 102ULC1 is a front edge portion of the second surface 102UL2 of the leg shield upper left portion 102UL and extends outward in the vehicle width direction as seen in the rear view. The leg shield upper left portion second coupling portion 102ULC2 is a front edge portion of the first surface 102UL1 of the leg shield upper left portion 102UL and extends downward in the vehicle up-down direction from an outer end portion in the vehicle width direction of the leg shield upper left portion first coupling portion 102ULC1.

As illustrated in FIG. 10, the leg shield upper right portion 102UR includes a leg shield upper right portion first coupling portion 102URC1 and a leg shield upper right portion second coupling portion 102URC2. More specifically, the leg shield upper right portion first coupling portion 102URC1 is a front edge portion of the second surface 102UR2 of the leg shield upper right portion 102UR and extends outward in the vehicle width direction as seen in the rear view. The leg shield upper right portion second coupling portion 102URC2 is a front edge portion of the first surface 102UR1 of the leg shield upper right portion 102UR and extends downward in the vehicle up-down direction from an outer end portion in the vehicle width direction of the leg shield upper right portion first coupling portion 102URC1.

As illustrated in FIG. 10, the leg shield lower left portion 102DL includes a leg shield lower left portion first coupling portion 102DLC1 and a leg shield lower left portion second coupling portion 102DLC2. In addition, the leg shield lower left portion 102DL further includes a leg shield lower left portion third coupling portion 102DLC3. More specifically, the leg shield lower left portion third coupling portion 102DLC3 is a front edge portion of the left side surface 102DL1 of the leg shield lower left portion 102DL, and extends downward in the vehicle up-down direction from a lower end portion of the leg shield upper left portion second coupling portion 102ULC2 as seen in the rear view. The leg shield lower left portion first coupling portion 102DLC1 is an upper front edge portion of the left fitting portion 102DL2 of the leg shield lower left portion 102DL, and extends further to the outside in the vehicle width direction than the lower end portion of the leg shield upper left portion second coupling portion 102ULC2 as seen in the rear view. In addition, the leg shield lower left portion first coupling portion 102DLC1 extends outward in the vehicle width direction from the lower end portion of the leg shield lower left portion third coupling portion 102DLC3 as seen in the rear view. The leg shield lower left portion second coupling portion 102DLC2 is a left front edge portion of the left fitting portion 102DL2 of the leg shield lower left portion 102DL, and extends downward in the vehicle up-down direction form the outer end portion in the vehicle width direction of the leg shield lower left portion first coupling portion 102DLC1 as seen in the rear view.

As illustrated in FIG. 10, the leg shield lower right portion 102DR includes a leg shield lower right portion first coupling portion 102DRC1 and a leg shield lower right portion second coupling portion 102DRC2. In addition, the leg shield lower right portion 102DR further includes a leg shield lower right portion third coupling portion 102DRC3. More specifically, the leg shield lower right portion third coupling portion 102DRC3 is a front edge portion of the right side surface 102DR1 of the leg shield lower right portion 102DR, and extends downward in the vehicle up-down direction from a lower end portion of the leg shield upper right portion second coupling portion 102URC2 as seen in the rear view. The leg shield lower right portion first coupling portion 102DRC1 is an upper front edge portion of the right fitting portion 102DR2 of the leg shield lower right portion 102DR, and extends further to the outside in the vehicle width direction than the lower end portion of the leg shield upper right portion second coupling portion 102URC2 as seen in the rear view. In addition, the leg shield lower right portion first coupling portion 102DRC1 extends outward in the vehicle width direction from the lower end portion of the leg shield lower right portion third coupling portion 102DRC3 as seen in the rear view. The leg shield lower right portion second coupling portion 102DRC2 is a right front edge portion of the right fitting portion 102DR2 of the leg shield lower right portion 102DR, and extends downward in the vehicle up-down direction from the outer end portion in the vehicle width direction of the leg shield lower right portion first coupling portion 102DRC1 as seen in the rear view.

The front cover 101 is connected to the leg shield 102 in a manner of coupling the front cover upper left portion first coupling portion 101ULC1 and the leg shield upper left portion first coupling portion 102ULC1, coupling the front cover upper left portion second coupling portion 101ULC2 and the leg shield upper left portion second coupling portion 102ULC2, coupling the front cover lower left portion third coupling portion 101DLC3 and the leg shield lower left portion third coupling portion 102DLC3, coupling the front cover lower left portion first coupling portion 101DLC1 and the leg shield lower left portion first coupling portion 102DLC1, coupling the front cover lower left portion second coupling portion 101DLC2 and the leg shield lower left portion second coupling portion 102DLC2, coupling the front cover upper right portion first coupling portion 101URC1 and the leg shield upper right portion first coupling portion 102URC1, coupling the front cover upper right portion second coupling portion 101URC2 and the leg shield upper right portion second coupling portion 102URC2, coupling the front cover lower right portion third coupling portion 101DRC3 and the leg shield lower right portion third coupling portion 102DRC3, coupling the front cover lower right portion first coupling portion 101DRC1 and the leg shield lower right portion first coupling portion 102DRC1, and coupling the front cover lower right portion second coupling portion 101DRC2 and the leg shield lower right portion second coupling portion 102DRC2.

As illustrated in FIG. 9, at least a portion of the front cover lower left portion 101DL is arranged further to the outside in the vehicle width direction than the front cover upper left portion 101UL and the leg shield upper left portion 102UL as seen in the front view of the vehicle. At least a portion of the front cover lower right portion 101DR is arranged further to the outside in the vehicle width direction than the front cover upper right portion 101UR and the leg shield upper right portion 102UR as seen in the front view of the vehicle. More specifically, the second surface 101DL2 of the front cover lower left portion 101DL and the third surface 101DL3 of the front cover lower left portion 101DL are respectively arranged further to the outside in the vehicle width direction than the front cover upper left portion 101UL and the leg shield upper left portion 102UL as seen in the front view of the vehicle. The first surface 101DR1 of the front cover lower right portion 101DR and the second surface 101DR2 of the front cover lower right portion 101DR are respectively arranged further to the outside in the vehicle width direction than the front cover upper right portion 101UR and the leg shield upper right portion 102UR as seen in the front view of the vehicle.

As seen in the side view of the vehicle, at least a portion of a boundary B that adjoins the front cover 101 and the leg shield 102 extends in the up-down direction. As illustrated in FIG. 6, a boundary BL2 that adjoins the front cover upper left portion second coupling portion 101ULC2 and the leg shield upper left portion second coupling portion 102ULC2, a boundary BL3 that adjoins the front cover lower left portion third coupling portion 101DLC3 and the leg shield lower left portion third coupling portion 102DLC3, and a boundary BL5 that adjoins the front cover lower left portion second coupling portion 101DLC2 and the leg shield lower left portion second coupling portion 102DLC2, extend in the up-down direction, or more specifically, extend downward toward the front from the rear of the vehicle as seen in the left side view of the vehicle. As illustrated in FIG. 7, a boundary BR2 that adjoins the front cover upper right portion second coupling portion 101URC2 and the leg shield upper right portion second coupling portion 102URC2, a boundary BR3 that adjoins the front cover lower right portion third coupling portion 101DRC3 and the leg shield lower right portion third coupling portion 102DRC3, and a boundary BR5 that adjoins the front cover lower right portion second coupling portion 101DRC2 and the leg shield lower right portion second coupling portion 102DRC2, extend in the up-down direction, or more specifically, extend downward toward the front from the rear of the vehicle as seen in the right side view of the vehicle.

As illustrated in FIG. 8, a boundary BL1 that adjoins the front cover upper left portion first coupling portion 101ULC1 and the leg shield upper left portion first coupling portion 102ULC1, a boundary BL4 that adjoins the front cover lower left portion first coupling portion 101DLC1 and the leg shield lower left portion first coupling portion 102DLC1, a boundary BR1 that adjoins the front cover upper right portion first coupling portion 101URC1 and the leg shield upper right portion first coupling portion 102URC1, and a boundary BR4 that adjoins the front cover lower right portion first coupling portion 101DRC1 and the leg shield lower right portion first coupling portion 102DRC1, all extend in the vehicle left-right direction in the plan view, or more specifically, extend outward in the vehicle width direction from the inside as seen in the plan view. The boundary BL1 is positioned further to the right in the vehicle left-right direction than the boundary BL4. The boundary BR1 is positioned further to the left in the vehicle left-right direction than the boundary BR4.

### (Headlight 14)

The headlight 14 is arranged on the front cover 101. As indicated above, the headlight 14 is provided in the opening 101O of the front cover 101. As illustrated in FIG. 1 and 2, at least a portion of the headlight 14 is positioned below the virtual horizontal line H as seen in the side view of the vehicle. As illustrated in FIG. 4, the headlight 14 is arranged below the first surface 101UR1 of the front cover upper right portion 101UR and the first surface 101UL1 of the front cover upper left portion 101UL as seen in the front view. As illustrated in FIG. 6, the headlight 14 is arranged below the first surface 101UL1 and the second surface 101UL2 of the front cover upper left portion 101UL as seen in the left side view of the vehicle. As illustrated in FIG. 7, the headlight 14 is arranged below the first surface 101UR1 and the second surface 101UR2 of the front cover upper right portion 101UR as seen in the right side view of the vehicle. As illustrated in FIG. 4, the shape of the headlight 14 is the shape of an arrow pointing downward as seen in the front view. More specifically, the headlight 14 is formed so that the upper edge and the lower edge extend upward and to the left and right sides from the center in the vehicle left-right direction, and the left edge and the right edge extend downward and inward.

### (Left side reinforcement cover 15 and right side reinforcement cover 16)

As illustrated in FIG. 3, the left side reinforcement cover 15 is arranged to the outside in the vehicle width direction of the front cover upper left portion 101UL and the leg shield upper left portion 102UL as seen in the plan view of the vehicle. The right side reinforcement cover 16 is arranged to the outside in the vehicle width direction of the front cover upper right portion 101UR and the leg shield upper right portion 102UR as seen in the plan view of the vehicle. As illustrated in FIG. 4, the left side reinforcement cover 15 is arranged to the outside in the vehicle width direction of the front cover upper left portion 101UL as seen in the front view of the vehicle. The right side reinforcement cover 16 is arranged to the outside in the vehicle width direction of the front cover upper right portion 101UR as seen in the front view of the vehicle. As illustrated in FIG. 5 and 10, the left side reinforcement cover 15 is arranged further to the outside in the vehicle width direction than the leg shield upper left portion 102UL and the first surface 101DL1 of the leg shield lower left portion 102DL as seen in the rear view of the vehicle. The right side reinforcement cover 16 is arranged to the outside in the vehicle width direction of the leg shield upper right portion 102UR and the first surface 101DR1 of the leg shield lower right portion 102DR as seen in the rear view of the vehicle.

As illustrated in FIG. 1, the left side reinforcement cover 15 overlaps the boundary B as seen in the left side view of the vehicle. The left side reinforcement cover 15 includes a left side reinforcement cover left front portion 15A that is positioned further to the front than the boundary B and that is connected to the front cover 101, and a left side reinforcement cover left rear portion 15B that is positioned further to the rear than the boundary B and that is connected to the leg shield 102.

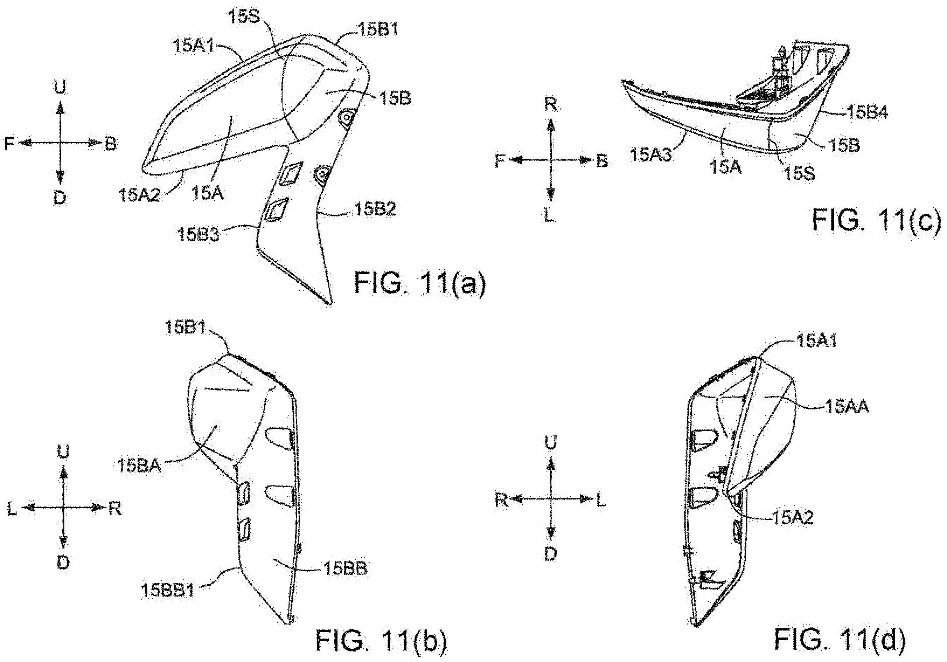

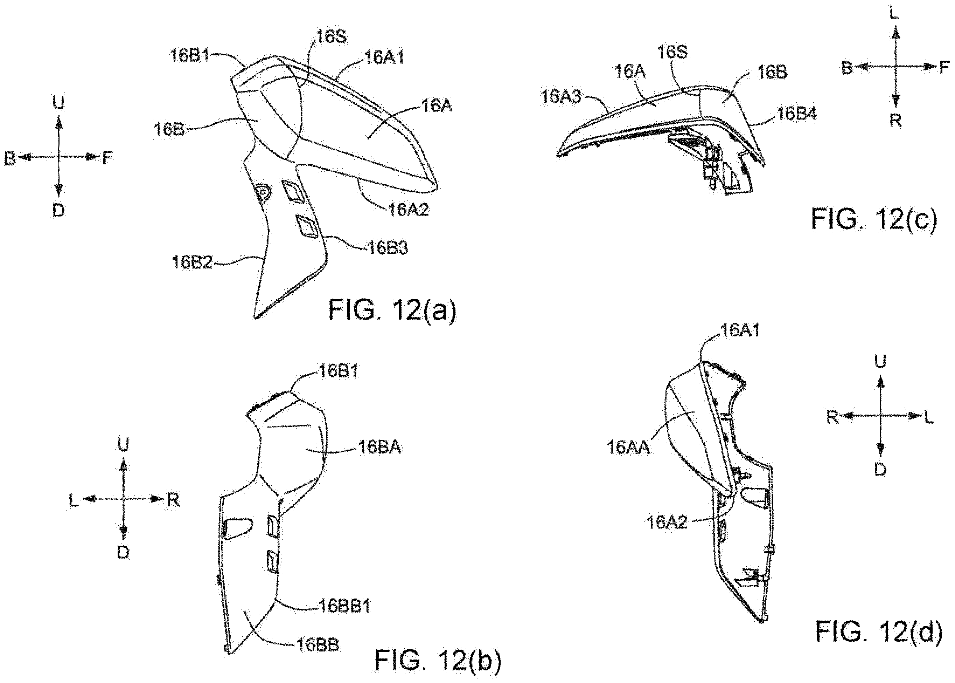

FIG. 11(a) is a vehicle left side view of the left side reinforcement cover 15. FIG. 11(b) is a vehicle plan view of the left side reinforcement cover 15. FIG. 11(c) is a vehicle rear view of the left side reinforcement cover 15. FIG. 12(a) is a vehicle right side view of the right side reinforcement cover 16. FIG. 12(b) is a vehicle plan view of the right side reinforcement cover 16. FIG. 12(c) is a vehicle rear view of the right side reinforcement cover 16. As illustrated in FIG. 1, the left side reinforcement cover left front portion 15A is longer than the left side reinforcement cover left rear portion 15B in the vehicle front-back direction as seen in the left side view of the vehicle. The left side reinforcement cover left rear portion 15B is longer than the left side reinforcement cover left front portion 15A in the vehicle up-down direction as seen in the left side view of the vehicle.

As illustrated in FIG. 11(a), an upper edge 15B1 of the left side reinforcement cover left rear portion 15B is formed in a manner of extending forward and upward of the vehicle as seen in the left side view of the vehicle. An upper edge 15A1 of the left side reinforcement cover left front portion 15A is formed in a manner of extending forward and downward of the vehicle from the front end of the upper edge 15B1 of the left side reinforcement cover left rear portion 15B. More specifically, in the left side view of the vehicle, the upper edge 15A1 of the left side reinforcement cover left front portion 15A firstly extends forward and downward of the vehicle in a gradual slope from the front end of the upper edge 15B1 of the left side reinforcement cover left rear portion 15B, and further extends forward and downward of the vehicle in a steep slope. A lower edge 15A2 of the left side reinforcement cover left front portion 15A is formed in a manner of extending rearward and upward of the vehicle from the front end of the upper edge 15A1 of the left side reinforcement cover left front portion 15A as seen in the left side view of the vehicle. In addition, as seen in the left side view of the vehicle, a rear edge 15B2 of the left side reinforcement cover left rear portion 15B is formed in a manner of extending forward and downward of the vehicle from the rear end of the upper edge 15B1 of the left side reinforcement cover left rear portion 15B and then extend rearward and downward of the vehicle. In addition, a front edge 15B3 of the left side reinforcement cover left rear portion 15B extends downward from the rear of the vehicle toward the front and then extends rearward and downward of the vehicle, and is connected to the lower end of the rear edge 15B2 of the left side reinforcement cover left rear portion 15B.

As illustrated in FIG. 11(b), a left edge 15A3 of the left side reinforcement cover left front portion 15A is formed in a manner of extending rearward and leftward from the front of the vehicle as seen in the plan view of the vehicle. As seen in the plan view of the vehicle, a left edge 15B4 of the left side reinforcement cover left rear portion 15B is formed in a manner of extending rearward and rightward of the vehicle in a gradual slope from the rear end of the left edge 15A3 of the left side reinforcement cover left front portion 15A and then extend rearward and rightward of the vehicle in a steep slope. A ridgeline 15S that adjoins the left side reinforcement cover left front portion 15A and the left side reinforcement cover left rear portion 15B is formed in a manner of extending in the vehicle width direction as seen in the plan view of the vehicle.

As illustrated in FIG. 11(c), the left side reinforcement cover left front portion 15A includes a bulging portion 15AA. The bulging portion 15AA is formed in a manner of bulging outward in the vehicle width direction as seen in the front view of the vehicle.

As illustrated in FIG. 11(d), the left side reinforcement cover left rear portion 15B includes a bulging portion 15BA and a downward extending portion 15BB. The bulging portion 15BA is formed in a manner of bulging outward in the vehicle width direction as seen in the rear view of the vehicle. The downward extending portion 15BB is formed so that a left edge 15BB1 thereof is positioned further inward in the vehicle width direction than the bulging portion 15BA, and the downward extending portion 15BB is formed in a manner of extending further downward than the bulging portion 15BA.

As illustrated in FIG. 2, the right side reinforcement cover 16 overlaps the boundary B as seen in the right side view of the vehicle. The right side reinforcement cover 16 includes a right side reinforcement cover right front portion 16A that is positioned further to the front than the boundary B and that is connected to the front cover 101, and a right side reinforcement cover right rear portion 16B that is positioned further to the rear than the boundary B and that is connected to the leg shield 102.

As illustrated in FIG. 2, the right side reinforcement cover right front portion 16A is longer than the right side reinforcement cover right rear portion 16B in the vehicle front-back direction as seen in the right side view of the vehicle. The right side reinforcement cover right rear portion 16B is longer than the right side reinforcement cover right front portion 16A in the vehicle up-down direction as seen in the right side view of the vehicle.

As illustrated in FIG. 12(a), an upper edge 16B1 of the right side reinforcement cover right rear portion 16B is formed in a manner of extending forward and upward of the vehicle as seen in the right side view of the vehicle. An upper edge 16A1 of the right side reinforcement cover right front portion 16A is formed in a manner of extending forward and downward of the vehicle from the front end of the upper edge 16B1 of the right side reinforcement cover right rear portion 16B. More specifically, as seen in the right side view of the vehicle, the upper edge 16A1 of the right side reinforcement cover right front portion 16A firstly extends forward and downward of the vehicle in a gradual slope from the front end of the upper edge 16B1 of the right side reinforcement cover right rear portion 16B, and further extends forward and downward of the vehicle in a steep slope. A lower edge 16A2 of the right side reinforcement cover right front portion 16A is formed in a manner of extending rearward and upward of the vehicle from the front end of the upper edge 16A1 of the right side reinforcement cover right front portion 16A as seen in the right side view of the vehicle. In addition, as seen in the right side view of the vehicle, a rear edge 16B2 of the right side reinforcement cover right rear portion 16B is formed in a manner of extending forward and downward of the vehicle from the rear end of the upper edge 16B1 of the right side reinforcement cover right rear portion 16B and then extending rearward and downward of the vehicle. In addition, a front edge 16B3 of the right side reinforcement cover right rear portion 16B extends downward from the rear of the vehicle toward the front and then extends rearward and downward of the vehicle, and is connected to the lower end of the rear edge 16B2 of the right side reinforcement cover right rear portion 16B.

As illustrated in FIG. 12(b), a right edge 16A3 of the right side reinforcement cover right front portion 16A is formed in a manner of extending rearward right from the front of the vehicle as seen in the plan view of the vehicle. As seen in the plan view of the vehicle, a right edge 16B4 of the right side reinforcement cover right rear portion 16B is formed in a manner of extending rearward and leftward of the vehicle in a gradual slope from the rear end of the right edge 16A3 of the right side reinforcement cover right front portion 16A and then extending rearward and leftward of the vehicle in a steep slope. A ridgeline 16S that adjoins the right side reinforcement cover right front portion 16A and the right side reinforcement cover right rear portion 16B is formed in a manner of extending in the vehicle width direction as seen in the plan view of the vehicle.

As illustrated in FIG. 12(c), the right side reinforcement cover right front portion 16A includes a bulging portion 16AA. The bulging portion 16AA is formed in a manner of bulging outward in the vehicle width direction as seen in the front view of the vehicle. As illustrated in FIG. 12(d), the right side reinforcement cover right rear portion 16B includes a bulging portion 16BA and a downward extending portion 16BB. The bulging portion 16BA is formed in a manner of bulging outward in the vehicle width direction as seen in the rear view of the vehicle. The downward extending portion 16BB is formed so that a right edge 16BB1 thereof is positioned further inside in the vehicle width direction than the bulging portion 16BA, and the downward extending portion 16BB is formed in a manner of extending further downward than the bulging portion 16BA.

As illustrated in FIG. 1 and 6, the left side reinforcement cover left front portion 15A is arranged below the first surface 101UL1 of the front cover upper left portion 101UL as seen in the left side view of the vehicle. The left side reinforcement cover left front portion 15A is arranged above the second surface 101DL2 and the third surface 101DL3 of the front cover lower left portion 101DL as seen in the left side view of the vehicle. At least a portion of the left side reinforcement cover left front portion 15A is arranged further to the rear than the headlight 14 as seen in the left side view of the vehicle. At least a portion of the left side reinforcement cover left front portion 15A is arranged in a manner of overlapping the second surface 101 UL2 of the front cover upper left portion 101UL as seen in the left side view of the vehicle.

As illustrated in FIG. 1, the left side reinforcement cover left front portion 15A is formed in a manner of extending forward and downward of the vehicle as seen in the left side view of the vehicle. At least a portion of the left side reinforcement cover left front portion 15A is positioned below the virtual horizontal line H as seen in the left side view of the vehicle. The front end portion of the left side reinforcement cover left front portion 15A overlaps the headlight 14 as seen in the left side view of the vehicle. More specifically, the left side reinforcement cover left front portion 15A is formed so that the front end portion thereof is positioned below the virtual horizontal line H as seen in the left side view of the vehicle. The left side reinforcement cover left front portion 15A is formed so that the front end portion thereof is positioned below the upper edge of the headlight 14 as seen in the left side view of the vehicle. The left side reinforcement cover left front portion 15A is formed so that the front end portion thereof is positioned in approximately the same position as the rear end portion of the lower edge of the headlight 14 in the vehicle up-down direction as seen in the left side view of the vehicle.

In addition, as illustrated in FIG. 1, the upper end of the ridgeline 15S that adjoins the left side reinforcement cover left front portion 15A and the left side reinforcement cover left rear portion 15B adjoins the boundary B and matches the boundary B in the front-back direction as seen in the left side view of the vehicle. As illustrated in FIG. 3, the inside end in the vehicle width direction of the ridgeline 15S that adjoins the left side reinforcement cover left front portion 15A and the left side reinforcement cover left rear portion 15B adjoins the boundary B and matches the boundary B in the front-back direction as seen in the plan view of the vehicle.

As illustrated in FIG. 1 and 6, at least a portion of the left side reinforcement cover left rear portion 15B is arranged below the first surface 101UL1 of the front cover upper left portion 101UL as seen in the left side view of the vehicle. As illustrated in FIG. 1 and 6, the bulging portion 15BA of the left side reinforcement cover left rear portion 15B is arranged above the second surface 101DL2 and the third surface 101DL3 of the front cover lower left portion 101 DL as seen in the left side view of the vehicle. The portion of the left side reinforcement cover left rear portion 15B positioned below the rear end of the lower edge 15A2 of the left side reinforcement cover left front portion 15A is arranged further to the rear than the third surface 101DL3 of the front cover lower left portion 101DL. At least a portion of the left side reinforcement cover left rear portion 15B is arranged in a manner of overlapping the first surface 102UL1 of the leg shield upper left portion 102UL as seen in the left side view of the vehicle.

As illustrated in FIG. 2 and 7, the right side reinforcement cover right front portion 16A is arranged below the first surface 101UR1 of the front cover upper right portion 101UR as seen in the right side view of the vehicle. The right side reinforcement cover right front portion 16A is arranged above the second surface 101DR2 and the third surface 101DR3 of the front cover lower right portion 101DR as seen in the right side view of the vehicle. At least a portion of the right side reinforcement cover right front portion 16A is arranged further to the rear than the headlight 14 as seen in the right side view of the vehicle. At least a portion of the right side reinforcement cover right front portion 16A is arranged in a manner of overlapping the second surface 101UR2 of the front cover upper right portion 101UR as seen in the right side view of the vehicle.

As illustrated in FIG. 2, the right side reinforcement cover right front portion 16A is formed in a manner of extending forward and downward of the vehicle as seen in the right side view of the vehicle. At least a portion of the right side reinforcement cover right front portion 16A is positioned below the virtual horizontal line H as seen in the right side view of the vehicle. The front end portion of the right side reinforcement cover right front portion 16A overlaps the headlight 14 as seen in the right side view of the vehicle. More specifically, the right side reinforcement cover right front portion 16A is formed so that the front end portion thereof is positioned below the virtual horizontal line H as seen in the right side view of the vehicle. The right side reinforcement cover right front portion 16A is formed so that the front end portion thereof is positioned below the upper edge of the headlight 14 as seen in the right side view of the vehicle. The right side reinforcement cover right front portion 16A is formed so that the front end portion thereof is positioned in approximately the same position as the rear end portion of the lower edge of the headlight 14 in the vehicle up-down direction as seen in the right side view of the vehicle.

In addition, as illustrated in FIG. 2, the upper end of the ridgeline 16S that adjoins the right side reinforcement cover right front portion 16A and the right side reinforcement cover right rear portion 16B adjoins the boundary B and matches the boundary B in the front-back direction as seen in the right side view of the vehicle. As illustrated in FIG. 3, the inside end in the vehicle width direction of the ridgeline 16S that adjoins the right side reinforcement cover right front portion 16A and the right side reinforcement cover right rear portion 16B adjoins the boundary B and matches the boundary B in the front-back direction as seen in the plan view of the vehicle.

As illustrated in FIG. 2 and 7, at least a portion of the right side reinforcement cover right rear portion 16B is arranged below the first surface 101UR1 of the front cover upper right portion 101UR as seen in the right side view of the vehicle. As illustrated in FIG. 2 and 7, the bulging portion 16BA of the right side reinforcement cover right rear portion 16B is arranged above the second surface 101DR2 and the third surface 101DR3 of the front cover lower right portion 101DR as seen in the right side view of the vehicle. The portion of the right side reinforcement cover right rear portion 16B positioned below the rear end of the lower edge 16A2 of the right side reinforcement cover right front portion 16A is arranged further to the rear than third surface 101DR3 of the front cover lower right portion 101DR. At least a portion of the right side reinforcement cover right rear portion 16B is arranged in a manner of overlapping the first surface 102UR1 of the leg shield upper right portion 102UR as seen in the right side view of the vehicle.

As illustrated in FIG. 3, at least a portion of the left side reinforcement cover 15 protrudes further to the outside in the vehicle width direction than the boundary B as seen in the plan view of the vehicle. More specifically, as illustrated in FIG. 3, at least a portion of the left side reinforcement cover 15 in the vicinity of the ridgeline 15S that adjoins the left side reinforcement cover left front portion 15A and the left side reinforcement cover left rear portion 15B protrudes further to the outside in the vehicle width direction than the boundary B as seen in the plan view of the vehicle. As illustrated in FIG. 3, the bulging portion 15AA of the left side reinforcement cover left front portion 15A and the bulging portion 15BA of the left side reinforcement cover left rear portion 15B of the left side reinforcement cover 15 protrudes further to the outside in the vehicle width direction than the boundary B.

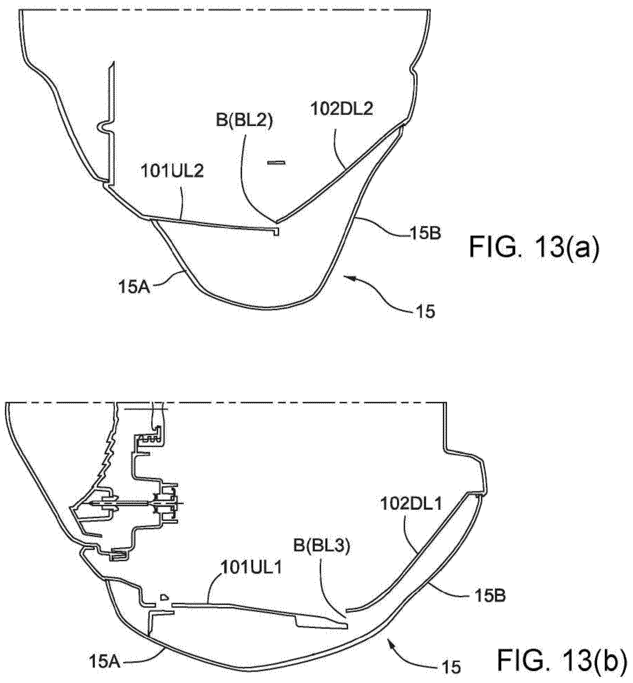

FIG. 13(a) is a cross-sectional view along line A-A in FIG 1. As illustrated in FIG. 13(a), the left side reinforcement cover left rear portion 15B that is above the virtual horizontal line H has its rear end connected to the second surface 102UL2 of the leg shield upper left portion 102UL, extends outward in the vehicle width direction from the rear of the vehicle toward the front, and is connected to the rear end of the left side reinforcement cover left front portion 15A that is above the virtual horizontal line H. The left side reinforcement cover left front portion 15A that is above the virtual horizontal line H has its rear end connected to the left side reinforcement cover left rear portion 15B, extends inward in the vehicle width direction from the rear of the vehicle toward the front, and is connected to the second surface 101UL2 of the front cover upper left portion 101 UL. As a result, the left side reinforcement cover 15 that is above the virtual horizontal line H is formed in a manner of straddling the boundary B in the vehicle front-back direction.

FIG. 13(b) is a cross-sectional view along line B-B in FIG 1. As illustrated in FIG. 13(b), the left side reinforcement cover left rear portion 15B that is below the virtual horizontal line H has its rear end connected to the left side surface 102DL1 of the leg shield lower left portion 102UL, extends outward in the vehicle width direction from the rear of the vehicle toward the front, and is connected to the rear end of the left side reinforcement cover left front portion 15A that is below the virtual horizontal line H. The left side reinforcement cover left front portion 15A that is below the virtual horizontal line H has its rear end connected to the left side reinforcement cover left rear portion 15B, extends inward in the vehicle width direction from the rear of the vehicle toward the front, and is connected to the first surface 101DL1 of the front cover lower left portion 101DL. As a result, the left side reinforcement cover 15 that is below the virtual horizontal line H is formed in a manner of straddling the boundary B in the vehicle front-back direction.

As illustrated in FIG. 3, at least a portion of the right side reinforcement cover 16 protrudes further to the outside in the vehicle width direction than the boundary B as seen in the plan view of the vehicle. More specifically, as illustrated in FIG. 3, at least a portion of the right side reinforcement cover 16 in the vicinity of the ridgeline 16S that adjoins the right side reinforcement cover right front portion 16A and the right side reinforcement cover right rear portion 16B protrudes further to the outside in the vehicle width direction than the boundary B as seen in the plan view of the vehicle. As illustrated in FIG. 3, the bulging portion 16AA of the right side reinforcement cover right front portion 16A and the bulging portion 16BA of the right side reinforcement cover right rear portion 16B of the right side reinforcement cover 16 protrudes further to the outside in the vehicle width direction than the boundary B.

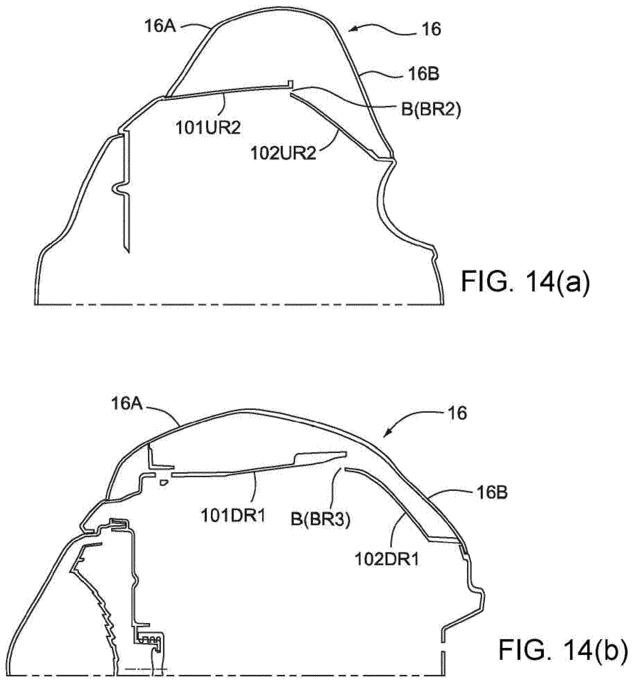

FIG. 14(a) is a cross-sectional view along line A-A in FIG 2. As illustrated in FIG. 14(a), the right side reinforcement cover right rear portion 16B that is above the virtual horizontal line H has its rear end connected to the second surface 102UR2 of the leg shield upper right portion 102UR, extends outward in the vehicle width direction from the rear of the vehicle toward the front, and is connected to the rear end of the right side reinforcement cover right front portion 16A that is above the virtual horizontal line H. The right side reinforcement cover right front portion 16A that is above the virtual horizontal line H has its rear end connected to the right side reinforcement cover right rear portion 16B, extends inward in the vehicle width direction from the rear of the vehicle toward the front, and is connected to the second surface 101UR2 of the front cover vehicle upper right portion 101UR. As a result, the right side reinforcement cover 16 that is above the virtual horizontal line H is formed so as to straddle the boundary B in the vehicle front-back direction.

FIG. 14(b) is a cross-sectional view along line B-B in FIG 2. As illustrated in FIG. 14(b), the right side reinforcement cover right rear portion 16B that is below the virtual horizontal line H has its rear end connected to the right side surface 102DR1 of the leg shield lower right portion 102DR, extends outward in the vehicle width direction from the rear of the vehicle toward the front, and is connected to the rear end of the right side reinforcement cover right front portion 16A that is below the virtual horizontal line H. The right side reinforcement cover right front portion 16A that is below the virtual horizontal line H has its rear end connected to the right side reinforcement cover right rear portion 16B, extends inward in the vehicle width direction from the rear of the vehicle toward the front, and is connected to the first surface 101DR1 of the front cover lower right portion 101DR. As a result, the right side reinforcement cover 16 that is below the virtual horizontal line H is formed in a manner of straddling the boundary B in the vehicle front-back direction.

As illustrated in FIG. 4, the left side reinforcement cover left front portion 15A is formed so as to protrude outward in the vehicle width direction from the front cover upper left portion 101UL as seen in the front view of the vehicle. More specifically, as illustrated in FIG. 4 and 9, the left side reinforcement cover left front portion 15A is arranged further to the outside in the vehicle width direction than the first surface 101UL1 of the front cover upper left portion 101UL and the first surface 101DL1 of the front cover lower left portion 101DL as seen in the left side view of the vehicle. As illustrated in FIG. 4 and 9, the left side reinforcement cover left front portion 15A is formed in a manner of protruding further to the outside in the vehicle width direction than the second surface 101UL2 of the front cover upper left portion 101UL as seen in the front view of the vehicle. The left side reinforcement cover left front portion 15A is arranged further to the left in the vehicle left-right direction than the headlight 14 as seen in the front view of the vehicle. The left side reinforcement cover left front portion 15A is arranged above the second surface 101 DL2 and the third surface 101DL3 of the front cover lower left portion 101DL as seen in the front view of the vehicle.

As illustrated in FIG. 4, the outer end portion of the left side reinforcement cover left front portion 15A is arranged, in the vehicle width direction, in a manner of being adjacent to the outer end portion in the vehicle width direction of the front cover lower left portion 101DL as seen in the front view of the vehicle. The outer end portion in the vehicle width direction of the left side reinforcement cover 15 does not protrude further to the outside in the vehicle width direction than the outer end portion in the vehicle width direction of the front cover lower left portion 101DL as seen in the front view of the vehicle. More specifically, the outer end portion in the vehicle width direction of the left side reinforcement cover 15 is arranged in a manner of being adjacent to the third surface 101DL3 of the front cover lower left portion 101DL in the vehicle width direction.

As illustrated in FIG. 3, the outer end portion in the vehicle width direction of the left side reinforcement cover 15 is arranged, in the vehicle width direction, in a manner of being adjacent to the outer end portion in the vehicle width direction of the front cover lower left portion 101DL as seen in the plan view of the vehicle. The outer end portion in the vehicle width direction of the left side reinforcement cover 15 does not protrude further to the outside in the vehicle width direction than the outer end portion in the vehicle width direction of the front cover lower left portion 101DL as seen in the plan view of the vehicle. More specifically, the outer end portion in the vehicle width direction of the left side reinforcement cover 15 is arranged in a manner of being adjacent to the third surface 101 DL3 of the front cover lower left portion 101DL in the vehicle width direction as seen in the plan view of the vehicle. A left edge 15A3 of the left side reinforcement cover left front portion 15A and a left edge 15B4 of the left side reinforcement cover left rear portion 15B are both arranged further to the inside in the vehicle width direction than the outer end portion in the vehicle width direction of the third surface 101DL3 of the front cover lower left portion 101DL. The left edge 15A3 of the left side reinforcement cover left front portion 15A is positioned inward in the vehicle width direction from the rear of the vehicle toward the front as seen in the plan view of the vehicle. Specifically, the rear end portion of the left edge 15A3 of the left side reinforcement cover left front portion 15A is positioned further to the outside in the vehicle width direction than the front end portion as seen in the plan view of the vehicle.

As illustrated in FIG. 4, the right side reinforcement cover right front portion 16A is formed in a manner of protruding outward in the vehicle width direction from the front cover upper right portion 101UR as seen in the front view of the vehicle. More specifically, as illustrated in FIG. 4 and 9, the right side reinforcement cover right front portion 16A is arranged further to the outside in the vehicle width direction than the first surface 101UR1 of the front cover upper right portion 101UR and the first surface 101DR1 of the front cover lower right portion 101DR as seen in the right side view of the vehicle. As illustrated in FIG. 4 and 9, the right side reinforcement cover right front portion 16A is formed in a manner of protruding further to the outside in the vehicle width direction further than the second surface 101UR2 of the front cover upper right portion 101UR as seen in the front view of the vehicle. The right side reinforcement cover right front portion 16A is arranged further to the right in the vehicle left-right direction than the headlight 14 as seen in the front view of the vehicle. The right side reinforcement cover right front portion 16A is arranged above the second surface 101 DR2 and the third surface 101DR3 of the front cover lower right portion 101DR as seen in the front view of the vehicle.

As illustrated in FIG. 4, the outer end portion of the right side reinforcement cover right front portion 16A is arranged, in the vehicle width direction, in a manner of being adjacent to the outer end portion in the vehicle width direction of the front cover lower right portion 101DR as seen in the front view of the vehicle. The outer end portion in the vehicle width direction of the right side reinforcement cover 16 does not protrude further to the outside in the vehicle width direction than the outer end portion in the vehicle width direction of the front cover lower right portion 101DR as seen in the front view of the vehicle. More specifically, the outer end portion in the vehicle width direction of the right side reinforcement cover 16 is arranged in a manner of being adjacent to the third surface 101DR3 of the front cover lower right portion 101DR in the vehicle width direction as seen in the front view of the vehicle.

As illustrated in FIG. 3, the outer end portion in the vehicle width direction of the right side reinforcement cover 16 is arranged, in the vehicle width direction, in a manner of being adjacent to the outer end portion in the vehicle width direction of the front cover lower right portion 101DR as seen in the plan view of the vehicle. The outer end portion in the vehicle width direction of the right side reinforcement cover 16 does not protrude further to the outside in the vehicle width direction than the outer end portion in the vehicle width direction of the front cover lower right portion 101DR as seen in the plan view of the vehicle. More specifically, the outer end portion in the vehicle width direction of the right side reinforcement cover 16 is arranged in a manner of being adjacent to the third surface 101DR3 of the front cover lower right portion 101DR in the vehicle width direction as seen in the plan view of the vehicle. The right edge 16A3 of the right side reinforcement cover right front portion 16A and the right edge 16B4 of the right side reinforcement cover right rear portion 16B are both arranged further to the inside in the vehicle width direction than the outer end portion in the vehicle width direction of the third surface 101DR3 of the front cover lower right portion 101DR. The right edge 16A3 of the right side reinforcement cover right front portion 16A is positioned inward in the vehicle width direction from the rear of the vehicle toward the front as seen in the plan view of the vehicle. Specifically, the rear end portion of the right edge 16A3 of the right side reinforcement cover right front portion 16A is positioned further to the outside in the vehicle width direction than the front end portion as seen in the plan view of the vehicle.

As illustrated in FIG. 1 and 5, the portion of the left side reinforcement cover left rear portion 15B positioned below the rear end of the lower edge 15A2 of the left side reinforcement cover left front portion 15A, is arranged further to the inside in the vehicle width direction than the left side reinforcement cover left front portion 15A as seen in the rear view of the vehicle. The bulging portion 15BA of the left side reinforcement cover left rear portion 15B is arranged above the left fitting portion 102DL2 of the leg shield 102 as seen in the rear view of the vehicle. The outer end portion of the bulging portion 15BA of the left side reinforcement cover left rear portion 15B is arranged in approximately the same position in the vehicle width direction as the outer end portion of the left fitting portion 102DL2 of the leg shield 102 as seen in the rear view of the vehicle. The downward extending portion 15BB of the left side reinforcement cover left rear portion 15B is arranged further to the inside in the vehicle width direction than the left fitting portion 102DL2 of the leg shield 102 as seen in the rear view of the vehicle.

As illustrated in FIG. 2 and 5, the portion of the right side reinforcement cover right rear portion 16B positioned below the rear end of the lower edge 16A2 of the right side reinforcement cover right front portion 16A is arranged further to the inside in the vehicle width direction than the right side reinforcement cover right front portion 16A as seen in the rear view of the vehicle. The bulging portion 16BA of the right side reinforcement cover right rear portion 16B is arranged above the right fitting portion 102DR2 of the leg shield 102 as seen in the rear view of the vehicle. The outer end portion of the bulging portion 16BA of the right side reinforcement cover right rear portion 16B is arranged in approximately the same position in the vehicle width direction as the outer end portion of the right fitting portion 102DR2 of the leg shield 102 as seen in the rear view of the vehicle. The downward extending portion 16BB of the right side reinforcement cover right rear portion 16B is arranged further to the inside in the vehicle width direction than the right fitting portion 102DR2 of the leg shield 102 as seen in the rear view of the vehicle.

### (Effects of embodiment)

(1) As indicated above, the straddled vehicle 1 of the present teaching includes the head pipe 21, the seat 6, the front cover unit 10, the footboard portion 13, the left side reinforcement cover 15, and the right side reinforcement cover 16. The seat 6 is arranged further to the rear of the vehicle than the head pipe 21 and includes the sitting surface 6S1 on which the driver sits. The front cover unit 10 is arranged further to the front than the seat 6. The footboard portion 13 is formed in a position below and behind of the front cover unit 10 and between the front cover unit 10 and the seat 6, and is a portion for the driver to place his/her feet. The left side reinforcement cover 15 is formed separately from the front cover unit 10. The right side reinforcement cover 16 is formed separately from the front cover unit 10. The front cover unit 10 includes the front cover 101 and the leg shield 102. The front cover 101 is arranged in front of the head pipe 21 and is formed in a manner of extending forward and downward of the vehicle. The leg shield 102 is arranged to the rear of the head pipe 21 and is connected to the front cover 101. The front cover 101 includes the front cover upper left portion 101UL, the front cover lower left portion 101DL, the front cover upper right portion 101UR, and the front cover lower right portion 101DR. The front cover upper left portion 101UL is positioned above a virtual horizontal line H that passes through the sitting surface 6S1 of the seat 6 as seen in the left side view of the vehicle. The front cover lower left portion 101DL is positioned below the virtual horizontal line H as seen in the left side view of the vehicle. The front cover upper right portion 101UR is positioned above the virtual horizontal line H as seen in the right side view of the vehicle. The front cover lower right portion 101DR is positioned below the virtual horizontal line H as seen in the right side view of the vehicle. The leg shield 102 includes the leg shield upper left portion 102UL, the leg shield lower left portion 102DL, the leg shield upper right portion 102UR, and the leg shield lower right portion 102DR. The leg shield upper left portion 102UL is positioned above the virtual horizontal line H as seen in the left side view of the vehicle. The leg shield lower left portion 102DL is positioned below the virtual horizontal line H as seen in the left side view of the vehicle. The leg shield upper right portion 102UR is positioned above the virtual horizontal line H as seen in the right side view of the vehicle. The leg shield lower right portion 102DR is positioned below the virtual horizontal line H as seen in the right side view of the vehicle. As seen in the front view of the vehicle, the front cover upper left portion 101UL and the leg shield upper left portion 102UL are arranged further to the inside in the vehicle width direction than at least a portion of the front cover lower left portion 101DL, and the front cover upper right portion 101UR and the leg shield upper right portion 102UR are arranged further to the inside in the vehicle width direction than at least a portion of the front cover lower right portion 101DR. As seen in the side view of the vehicle, at least a portion of the boundary B that adjoins the front cover 101 and the leg shield 102 extends in the up-down direction. The left side reinforcement cover 15 is arranged to the outside in the vehicle width direction of the front cover upper left portion 101UL and the leg shield upper left portion 102UL as seen in the plan view of the vehicle, and at least a portion of the left side reinforcement cover 15 protrudes further to the outside in the vehicle width direction than the boundary B as seen in the plan view of the vehicle and overlaps the boundary B as seen in the left side view of the vehicle. The right side reinforcement cover 16 is arranged to the outside in the vehicle width direction of the front cover upper right portion 101UR and the leg shield upper right portion 102UR as seen in the plan view of the vehicle, and at least a portion of the right side reinforcement cover 16 protrudes further to the outside in the vehicle width direction than the boundary B as seen in the plan view of the vehicle and overlaps the boundary B as seen in the right side view of the vehicle. The left side reinforcement cover 15 includes the left side reinforcement cover left front portion 15A that is positioned further to the front than the boundary B and that is connected to the front cover 101 as seen in the left side view of the vehicle, and the left side reinforcement cover left rear portion 15B that is positioned further to the rear than the boundary B and that is connected to the leg shield 102 as seen in the left side view of the vehicle. The left side reinforcement cover left front portion 15A is longer than the left side reinforcement cover left rear portion 15B in the vehicle front-back direction as seen in the left side view of the vehicle. The left side reinforcement cover left rear portion 15B is longer than the left side reinforcement cover left front portion 15A in the vehicle up-down direction as seen in the left side view of the vehicle. The right side reinforcement cover 16 includes the right side reinforcement cover right front portion 16A that is positioned further to the front than the boundary B and that is connected to the front cover 101 as seen in the right side view of the vehicle, and the right side reinforcement cover right rear portion 16B that is positioned further to the rear than the boundary B and that is connected to the leg shield 102 as seen in the right side view of the vehicle. The right side reinforcement cover right front portion 16A is longer than the right side reinforcement cover right rear portion 16B in the vehicle front-back direction as seen in the right side view of the vehicle. The right side reinforcement cover right rear portion 16B is longer than the right side reinforcement cover right front portion 16A in the vehicle up-down direction as seen in the right side view of the vehicle.

In the straddled vehicle 1 of the present embodiment, as to the front cover unit 10, the upper portions 101UL and 101UR, which the knees of the driver come into contact with and which are positioned above the virtual horizontal line H that passes through the sitting surface 6S1 of the seat 6 as seen in the side view of the vehicle, are recessed toward the inside in the vehicle width direction. As a result, the upper portions 101UL and 101UR of the front cover unit 10 that are positioned above the virtual horizontal line H that passes through the sitting surface 6S1 of the seat 6 as seen in the side view of the vehicle, are formed narrowly toward the inside in the vehicle width direction, and therefore even if the knees of the driver sitting on the seat 6 move toward the front of the vehicle, the knees are not likely to come into contact with the upper portions 101UL and 101UR of the front cover unit 10. Consequently, relative shifting in the up-down direction between the front cover 101 and the leg shield 102 of the front cover unit 10 caused by contact with the knees of the driver, can be suppressed.

In addition, as indicated above, as to the front cover unit 10, when the upper portions 101UL and 101UR that are positioned above the virtual horizontal line H that passes through the sitting surface 6S1 of the seat 6 as seen in the side view of the vehicle, are recessed toward the inside in the vehicle width direction, the upper edge portions (boundary BL1 and boundary BR1) of the boundary B that adjoins the front cover 101 and the leg shield 102 are shorter, and therefore the coupling rigidity between the front cover 101 and the leg shield 102 is reduced. As a result, when the moment force from the front end of the front cover 101, produced by the vibration in the up-down direction of the front cover 101 due to the traveling of the vehicle, is transmitted to the upper edge portion of the front cover 101, the coupling between the upper edge portion of the front cover 101 and the upper edge portion of the leg shield 102 cannot be maintained sufficiently and there is a fear that relative shifting in the up-down direction between the front cover 101 and the leg shield 102 will occur. In order to suppress the relative shifting in the up-down direction between the front cover 101 and the leg shield 102 caused by vibration of the front cover 101 due to the traveling of the straddled vehicle, the straddled vehicle 1 of the present teaching uses the left side reinforcement cover 15 and the right side reinforcement cover 16 as reinforcement covers, and the left side reinforcement cover 15 and the right side reinforcement cover 16 are attached separately further to the outside in the vehicle width direction than the upper portion positioned above the virtual horizontal line H that passes through the sitting surface 6S1 of the seat 6 as seen in the side view of the vehicle. The left side reinforcement cover 15 is arranged further to the outside in the vehicle width direction than the front cover upper left portion 101UL and the leg shield upper left portion 102UL as seen in the front view of the vehicle, and at least a portion of the left side reinforcement cover 15 overlaps the boundary B that adjoins the front cover 101 and the leg shield 102 as seen in the left side view of the vehicle. The right side reinforcement cover 16 is arranged further to the outside in the vehicle width direction than the front cover upper right portion 101UR and the leg shield upper right portion 102UR as seen in the front view of the vehicle, and at least a portion of the right side reinforcement cover 16 overlaps the boundary B that adjoins the front cover 101 and the leg shield 102 as seen in the right side view of the vehicle.

That is, the left side reinforcement cover 15 and the right side reinforcement cover 16 which are reinforcement covers respectively have front ends connected to the front cover 101 as seen in the side view of the vehicle, extend rearward from the front end while straddling the boundary B that adjoins the front cover 101 and the leg shield 102, and are attached to the front cover unit 10 so as to connect to the leg shield 102. As a result, the coupling rigidity between the front cover 101 and the leg shield 102 can be reinforced.

In addition, the respective shapes of the left side reinforcement cover 15 and the right side reinforcement cover 16 are convex shapes that protrude to the outside, and therefore the traveling wind can be prevented from blowing directly onto the knees of the driver. As a result, the reduction in the comfort of the knees of the driver can be suppressed.

Furthermore, by shaping the left side reinforcement cover 15 and the right side reinforcement cover 16 in a convex shape, the rigidity of the reinforcement covers is improved. If the rigidity of the reinforcement covers is improved, the coupling rigidity between the front cover 101 and the leg shield 102 can be further reinforced. As a result, the convex portions of the reinforcement covers are arranged in a manner of overlapping the boundary B that adjoins the front cover 101 and the leg shield 102 as seen in the side view of the vehicle. That is, at least a portion of the left side reinforcement cover 15 protrudes further to the outside in the vehicle width direction than the boundary B that adjoins the front cover 101 and the leg shield 102 as seen in the plan view of the vehicle and overlaps the boundary B as seen in the left side view of the vehicle. In addition, at least a portion of the right side reinforcement cover 16 protrudes further to the outside in the vehicle width direction than the boundary B that adjoins the front cover 101 and the leg shield 102 as seen in the plan view of the vehicle and overlaps the boundary B as seen in the right side view of the vehicle.

As a result, the reduction in the comfort of the knees of the driver can be suppressed. Moreover, because the coupling rigidity between the front cover 101 and the leg shield 102 can be sufficiently reinforced and ensured, the relative shifting in the up-down direction between the front cover 101 and the leg shield 102 can be suppressed.

Furthermore, in the left side reinforcement cover 15 and the right side reinforcement cover 16, when the portions further to the front of the vehicle than the boundary B are set as the front portions (right side reinforcement cover right front portion 16A, left side reinforcement cover left front portion 15A) and the portions further to the rear of the vehicle than the boundary B are set as the rear portions (right side reinforcement cover right rear portion 16B, left side reinforcement cover left rear portion 15B) in relation to the boundary B that adjoins the front cover 101 and the leg shield 102, the front portions of the reinforcement covers are longer than the rear portions in the vehicle front-back direction.

As indicated above, because the distance of the front cover 101 is long from the front edge thereof to the upper edge portion that is coupled to the upper end portion of the leg shield 102, the force (moment) applied to the upper edge portion of the front cover 101 is large when vibration in the up-down direction of the front cover 101 occurs due to the traveling of the vehicle. Therefore, by making the front portions of the left side reinforcement cover 15 and the right side reinforcement cover 16 which are the reinforcement covers longer than the rear portions in the vehicle front-back direction, vibration of the front cover 101 can be sufficiently suppressed by the front portions of the reinforcement covers. As a result, the relative shifting in the up-down direction between the front cover 101 and the leg shield 102 caused by the vibration of the front cover 101 due to the traveling of the straddled vehicle can be sufficiently suppressed.

In addition, the rear portions of the reinforcement covers among the left side reinforcement cover 15 and the right side reinforcement cover 16 are longer than the front portions in the vehicle up-down direction as seen in the side view of the vehicle. As a result, the attachment surface area of the rear portions of the reinforcement covers can be sufficiently ensured in the up-down direction even if the rear portions of the reinforcement covers do not extend to the rear. Consequently, the attachment rigidity of the reinforcement covers themselves can be ensured and therefore the attachment strength can be sufficiently ensured. As a result, because the attachment strength of the reinforcement covers can be sufficiently ensured even if the knees of the driver come into contact with the reinforcement covers, the reinforcement covers can be firmly attached and the attachment strength can be further ensured. Accordingly, because the attachment strength of the reinforcement covers can be sufficiently ensured, the relative shifting in the up-down direction between the front cover 101 and the leg shield 102 can be suppressed further.

In this way, the straddled vehicle can be provided that resolves the issue of ensuring the coupling rigidity between the front cover 101 and the leg shield 102 and suppressing the relative shifting in the up-down direction between the front cover 101 and the leg shield 102, and the issue of suppressing the reduction in comfort for the knees of the driver at the same time.

(2) In one preferred mode of the scooter type vehicle according to the present embodiment, the upper edge of the left side reinforcement cover left rear portion 15B is formed in a manner of extending forward and upward of the vehicle, and the upper edge of the left side reinforcement cover left front portion 15A is formed in a manner of extending forward and downward of the vehicle from the front end of the upper edge of the left side reinforcement cover left rear portion 15B, as seen in the left side view of the vehicle. The upper edge of the right side reinforcement cover right rear portion 16B is formed in a manner of extending forward and upward of the vehicle, and the upper edge of the right side reinforcement cover right front portion 16A is formed in a manner of extending forward and downward of the vehicle from the front end of the upper edge of the right side reinforcement cover right rear portion 16B, as seen in the right side view of the vehicle.

In this case, the left side reinforcement cover left front portion 15A is formed in a manner of extending forward and downward of the vehicle from the upper end of the left side reinforcement cover 15 as seen in the left side view of the vehicle, and the right side reinforcement cover right front portion 16A is formed in a manner of extending forward and downward of the vehicle from the front end of the upper edge of the right side reinforcement cover right rear portion 16B as seen in the right side view of the vehicle. As a result, the left side reinforcement cover left front portion 15A and the right side reinforcement cover right front portion 16A can both be largely formed forward and downward of the vehicle, whereby vibration of the front cover 101 can be further suppressed by the left side reinforcement cover left front portion 15A and the right side reinforcement cover right front portion 16A. Consequently, the relative shifting in the up-down direction between the front cover 101 and the leg shield 102 caused by the vibration of the front cover 101 due to the traveling of the straddled vehicle can further be sufficiently suppressed.

(3) In addition, in one preferred mode of the scooter type vehicle according to the present embodiment, the ridgeline 15S that adjoins the left side reinforcement cover left front portion 15A and the left side reinforcement cover left rear portion 15B has its upper end adjacent to the boundary B and matches the boundary B in the front-back direction as seen in the left side view of the vehicle. The ridgeline 16S that adjoins the right side reinforcement cover right front portion 16A and the right side reinforcement cover right rear portion 16B has its upper end adjacent to the boundary B and matches the boundary B in the front-back direction as seen in the right side view of the vehicle.

In this case, the upper end of the ridgeline 15S that adjoins the left side reinforcement cover left front portion 15A and the left side reinforcement cover left rear portion 15B adjoins the boundary B, whereby the left side reinforcement cover left front portion 15A is formed so as to extend forward and downward of the vehicle from the upper end of the left side reinforcement cover 15 as seen in the left side view of the vehicle. The upper end of the ridgeline 16S that adjoins the right side reinforcement cover right front portion 16A and the right side reinforcement cover right rear portion 16B adjoins the boundary B, whereby the right side reinforcement cover right front portion 16A is formed so as to extend forward and downward of the vehicle from the upper end of the right side reinforcement cover right front portion 16A as seen in the right side view of the vehicle. As a result, the left side reinforcement cover left front portion 15A and the right side reinforcement cover right front portion 16A can both be formed so as to be larger forward and downward of the vehicl, whereby vibration of the front cover 101 can be further suppressed by the left side reinforcement cover left front portion 15A and the right side reinforcement cover right front portion 16A. Consequently, the relative shifting in the up-down direction between the front cover 101 and the leg shield 102 caused by the vibration of the front cover 101 due to the traveling of the straddled vehicle 1 can further be suppressed.

(4) In one preferred mode of the scooter type vehicle 1 according to the present embodiment, a portion of the left side reinforcement cover left rear portion 15B positioned below a rear end of the lower edge of the left side reinforcement cover left front portion 15A, as seen in the rear view of the vehicle, is arranged further to the inside in the vehicle width direction than the left side reinforcement cover left front portion 15A. The portion of the right side reinforcement cover right rear portion 16B positioned below the rear end of the lower edge of the right side reinforcement cover right front portion 16A, as seen in the rear view of the vehicle, is arranged further to the inside in the vehicle width direction than the right side reinforcement cover right front portion 16A.

In this case, the portion of the left side reinforcement cover left rear portion 15B positioned below the rear end of the lower edge of the left side reinforcement cover left front portion 15A and the portion of the right side reinforcement cover right rear portion 16B positioned below the rear end of the lower edge of the right side reinforcement cover right front portion 16A are both recessed toward the inside in the vehicle width direction, whereby the knees are less likely to come into contact with the left side reinforcement cover 15 and the right side reinforcement cover 16. Accordingly, because the attachment surface area of the reinforcement covers can be sufficiently ensured in the up-down direction whereby the attachment strength of the reinforcement covers themselves can be sufficiently ensured, the relative shifting in the up-down direction between the front cover 101 and the leg shield 102 can be suppressed further. In addition, the relative shifting in the up-down direction between the front cover 101 and the leg shield 102 caused by contact with the knees of the driver can be suppressed, and the reduction in comfort of the knees of the driver can be further suppressed.

(5) In one preferred mode of the scooter type vehicle 1 according to the present embodiment, the front cover upper left portion 101UL includes the upper left portion first coupling portion 101ULC1 that extends outward in the vehicle width direction as seen in the front view, and the upper left portion second coupling portion 101ULC2 that extends downward in the vehicle up-down direction from an outer end portion in the vehicle width direction of the upper left portion first coupling portion 101ULC1 as seen in the front view. The front cover lower left portion 101DL includes the lower left portion first coupling portion 101DLC1 that extends further to the outside in the vehicle width direction than a lower end portion of the upper left portion second coupling portion 101ULC2 as seen in the front view, and the lower left portion second coupling portion 101DLC2 that extends downward in the vehicle up-down direction from an outer end portion of the lower left portion first coupling portion 101DLC1 as seen in the front view. The front cover upper right portion 101UR includes the upper right portion first coupling portion 101URC1 that extends outward in the vehicle width direction as seen in the front view, and the upper right portion second coupling portion 101URC2 that extends downward in the vehicle up-down direction from an outer end portion in the vehicle width direction of the upper right portion first coupling portion 101URC1 as seen in the front view. The front cover lower right portion 101DR includes the lower right portion first coupling portion 101URC1 that extends further to the outside in the vehicle width direction than the lower end portion of the upper right portion second coupling portion 101URC2 as seen in the front view, and the lower right portion second coupling portion 101URC2 that extends downward in the vehicle up-down direction from an outer end portion of the lower right portion first coupling portion 101URC1 as seen in the front view.

In this case, the front cover upper left portion 101UL has a stepped shape that is recessed further to the inside in the vehicle width direction than the lower left portion second coupling portion 101DLC2 as seen in the front view of the vehicle, and the front cover upper right portion 101UR has a stepped shape that is recessed further to the inside in the vehicle width direction than the lower end portion of the lower right portion second coupling portion 101URC2. As a result, the knees are further less likely to come into contact with the left side reinforcement cover 15 and the right side reinforcement cover 16, and the reduction in the comfort of the knees of the driver can be further suppressed. In addition, the rigidity of the front cover unit 10 itself can be improved and vibration of the front cover 101 can be suppressed in comparison to a shape that is not stepped as seen in the front view of the vehicle. Consequently, the relative shifting in the up-down direction between the front cover 101 and the leg shield 102 caused by the vibration of the front cover 101 due to the traveling of the straddled vehicle can be even further suppressed.

(6) In one preferred mode of the scooter type vehicle 1 according to the present embodiment, the outer end portion in the vehicle width of the left side reinforcement cover 15 as seen in the plan view of the vehicle is adjacent to the outer end portion in the vehicle width direction of the front cover lower left portion 101DL in the vehicle width direction, and does not protrude further to the outside in the vehicle width direction than the outer end portion in the vehicle width direction of the front cover lower left portion 101DL. The outer end portion in the vehicle width of the right side reinforcement cover 16 as seen in the plan view of the vehicle is adjacent to the outer end portion in the vehicle width direction of the front cover lower right portion 101DR in the vehicle width direction, and does not protrude further to the outside in the vehicle width direction than the outer end portion in the vehicle width direction of the front cover lower right portion 101DR.

In this case, both the left side reinforcement cover 15 and the right side reinforcement cover 16 can be formed in a manner of protruding greatly to the outside in the vehicle width direction, whereby the respective rigidities of the left side reinforcement cover 15 itself and the right side reinforcement cover 16 itself can be further increased. Consequently, the relative shifting in the up-down direction between the front cover 101 and the leg shield 102 caused by the vibration of the front cover 101 due to the traveling of the straddled vehicle can be further suppressed because the coupling rigidity between the front cover 101 and the leg shield 102 can be further ensured.

(7) In one preferred mode of the scooter type vehicle 1 according to the present embodiment, at least a portion of the left side reinforcement cover left front portion 15A is positioned below the virtual horizontal line H as seen in the left side view of the vehicle. At least a portion of the right side reinforcement cover right front portion 16A is positioned below the virtual horizontal line H as seen in the right side view of the vehicle.

As a result, the left side reinforcement cover left front portion 15A and the right side reinforcement cover right front portion 16A can both be formed in a comparatively large size forward and downward of the vehicle, whereby vibration of the front cover 101 can be further suppressed by the left side reinforcement cover left front portion 15A and the right side reinforcement cover right front portion 16A. Consequently, the relative shifting in the up-down direction between the front cover 101 and the leg shield 102 caused by the vibration of the front cover 101 due to the traveling of the straddled vehicle 1 can be further suppressed.

(8) In one preferred mode of the scooter type vehicle 1 according to the present embodiment, the left side reinforcement cover left front portion 15A is formed in a manner of protruding outward in the vehicle width direction from the front cover upper left portion 101UL as seen in the front view of the vehicle. The right side reinforcement cover right front portion 16A is formed in a manner of protruding outward in the vehicle width direction from the front cover upper right portion 101UR as seen in the front view of the vehicle.

In this case, both the left side reinforcement cover left front portion 15A and the right side reinforcement cover right front portion 16A can be formed in a manner of protruding outward in the vehicle width direction, whereby the respective rigidities of the left side reinforcement cover left front portion 15A itself and the right side reinforcement cover right front portion 16A itself can be further increased. Consequently, the relative shifting in the up-down direction between the front cover 101 and the leg shield 102 caused by the vibration of the front cover 101 due to the traveling of the straddled vehicle can be further suppressed because the coupling rigidity between the front cover 101 and the leg shield 102 can be further ensured.

(9) In one preferred mode of the scooter type vehicle 1 according to the present embodiment, the headlight 14 is arranged on the front cover 101. At least a portion of the headlight 14 is positioned below the virtual horizontal line H as seen in the side view of the vehicle. The left side reinforcement cover left front portion 15A extends forward and downward of the vehicle as seen in the left side view of the vehicle and the front end portion thereof is formed in a manner of overlapping the headlight 14. The right side reinforcement cover right front portion 16A extends forward and downward of the vehicle as seen in the right side view of the vehicle and the front end portion thereof is formed in a manner of overlapping the headlight 14.

In this case, at least a portion of the headlight 14 in the front cover 101 is arranged in a position below the virtual horizontal line H as seen in the side view of the vehicle, whereby the center of gravity of the front cover unit 10 is biased toward the lower side thereof. Conversely in this case, both the left side reinforcement cover left front portion 15A and the right side reinforcement cover right front portion 16A extend forward and downward of the vehicle, and the front end portions thereof are formed in a manner of overlapping the headlight 14. As a result, the left side reinforcement cover left front portion 15A and the right side reinforcement cover right front portion 16A can both be largely formed forward and downward of the vehicle. Consequently, even if the center of gravity of the front cover unit 10 is biased toward the lower side thereof, vibration of the front cover 101 can be sufficiently suppressed by the left side reinforcement cover left front portion 15A and the right side reinforcement cover right front portion 16A. Consequently, the relative shifting in the up-down direction between the front cover 101 and the leg shield 102 caused by the vibration of the front cover 101 due to the traveling of the straddled vehicle can be further suppressed because the coupling rigidity between the front cover 101 and the leg shield 102 can be further ensured.

### (Modifications)

Moreover, in the embodiment that has been explained, the seat 6 includes the sitting surface 6S1 on which the driver sits and the sitting surface 6S2 on which a rear seat passenger sits is arranged higher than the sitting surface 6S1. Alternatively, the sitting surface 6S2 may be arranged at the same height as the sitting surface 6S1. In addition, the seat 6 may only include sitting surface 6S1 on which the drivers sits.

Alternatively, the headlight 14 may include another shape such as, for example, a substantially upward-facing arrow shape or a substantially inverted trapezoid shape or the like. Here, "the headlight 14 is in a substantially upward-facing arrow shape" signifies that the headlight 14 is configured so that, as seen in the front view, the upper edge and the lower edge extend to both the left and right sides and downward from the center in the vehicle left-right direction and the left edge and the right edge extend downward and inward. In addition, "the headlight 14 is in a substantially inverted trapezoid shape" signifies that the headlight 14 is configured so that the upper edge and the lower edge both extend to the right and left sides from the center in the vehicle left-right direction so that the respective heights are maintained, and the left edge and the right edge extend downward and inward.

In addition, in the embodiment that has been explained, front cover lower left portion 101DL includes the first surface 101DL1 of the front cover lower left portion 101DL, the second surface 101DL2 of the front cover lower left portion 101DL, and the third surface 101DL3 of the front cover lower left portion 101DL. Alternatively, the front cover lower left portion 101DL may not include the first surface 101DL1 of the front cover lower left portion 101DL. The front cover lower right portion 101DR includes the first surface 101DR1 of the front cover lower right portion 101DR, a second surface 101DR2 of the front cover lower right portion 101DR, and the third surface 101DR3 of the front cover lower right portion 101DR. However, the front cover lower right portion 101DR may not include the first surface 101DR1 of the front cover lower right portion 101DR.

In addition, while the first surface 101DL1 of the front cover lower left portion 101DL is formed integrally with the second surface 101UL2 of the front cover upper left portion 101UL, the first surface 101DL1 may be formed separately. While the first surface 101DR1 of the front cover lower right portion 101DR is formed integrally with the second surface 101UR2 of the front cover upper right portion 101UR, the first surface 101DR1 may be formed separately.

In addition, the shapes of the front cover upper left portion 101UL, the front cover upper right portion 101UR, the front cover lower left portion 101DL, and the front cover lower right portion 101DR as seen in the front view may have different shapes, and at least a portion of the front cover lower left portion 101DL may be arranged further to the outside in the vehicle width direction than the front cover upper left portion 101UL and the leg shield upper left portion 102UL as seen in the front view of the vehicle, and at least a portion of the front cover lower right portion 101DR may only be arranged further to the outside in the vehicle width direction than the front cover upper right portion 101UR and the leg shield upper right portion 102UR. That is, the second surface 101DL2 of the front cover upper left portion 101UL may be formed in a shape that bulges toward the left in the vehicle left-right direction as seen in the front view and formed in a shape that is recessed toward the right in the vehicle left-right direction as seen in the front view. The second surface 101DR2 of the front cover upper right portion 101UR which is symmetric to the second surface 101DL2 of the front cover upper left portion 101UL may also be formed in the same way. In addition, the front cover lower left portion 101DL may be formed in a shape that bulges toward the left in the vehicle left-right direction as seen in the front view and formed in a shape that is recessed toward the right in the vehicle left-right direction as seen in the front view. The front cover lower right portion 101DR that is symmetric to the front cover lower left portion 101DL may be formed in the same way. The front cover upper left portion 101UL and the front cover lower left portion 101DL may be shaped in a manner of extending continuously leftward in the vehicle left-right direction and downward as seen in the front view. The front cover upper right portion 101UR and the front cover lower right portion 101DR may be shaped in a manner of extending continuously leftward in the vehicle left-right direction and downward as seen in the front view.

In addition, while in the embodiment that has been explained, the second surface 101DL2 of the front cover lower left portion 101DL is formed in a manner of extending forward and downward as seen in the left side view of the vehicle, the second surface 101DL2 may be formed in a manner of extending forward and upward or may be formed in a manner of extending horizontally toward the front. In addition, the second surface 101DL2 of the front cover lower left portion 101DL may be formed in a shape that bulges upward or in a shape that is recessed downward as seen in the left side view of the vehicle. The third surface 101 DR3 of the front cover lower right portion 101DR that is symmetric to the second surface 101 DL2 of the front cover lower left portion 101DL may be formed in the same way.

In the embodiment, as seen in the left side view of the vehicle, at least a portion of the left side reinforcement cover left front portion 15A is positioned below the virtual horizontal line H and the front end portion thereof overlaps the headlight 14. Alternatively, the front end portion may not overlap the headlight 14. In addition, the entirety of the left side reinforcement cover left front portion 15A may not be positioned above the virtual horizontal line H. The right side reinforcement cover right front portion 16A that is asymmetric to the left side reinforcement cover left front portion 15A may be formed in the same way.

In the embodiment, as seen in the left side view of the vehicle, the upper edge 15B1 of the left side reinforcement cover left rear portion 15B is formed in a manner of extending forward and upward of the vehicle, and the upper edge 15A1 of the left side reinforcement cover left front portion 15A is formed in a manner of extending forward and downward of the vehicle from the front end of the upper edge 15B1 of the left side reinforcement cover left rear portion 15B. Alternatively, the upper edge 15A1 of the left side reinforcement cover left front portion 15A may be formed so as to extend downward from the front end of the upper edge 15B1 of the left side reinforcement cover left rear portion 15B and then extend forward and downward of the vehicle. The upper edge 16A1 of the right side reinforcement cover right front portion 16A that is asymmetric to the upper edge 15A1 of the left side reinforcement cover left front portion 15A may be formed in the same way.

Alternatively to the embodiment that has been explained, the straddled vehicle may include three or more wheels. For example, the straddled vehicle may include two front wheels and one rear wheel. Alternatively to the embodiment that has been explained, the straddled vehicle may be another type of automated two-wheel vehicle such as a sports type of a moped type. Alternatively to the embodiment that has been explained, the straddled vehicle may be another type of vehicle such as a four-wheel buggy such as an all-terrain vehicle (ATV). When the present teaching is applied to a motorized vehicle, the power unit may be a motor instead of an engine.

### List of Reference Numerals

- 1: Straddled vehicle
- 2: Vehicle frame
- 3: Steering shaft
- 4: Front fork portion
- 5: Power unit
- 6: Seat
- 6S1: Sitting surface
- 6S2: Sitting surface
- 7: Front wheel
- 8: Handle
- 8A: Handle cover
- 8AL: Left end portion of handle cover
- 8AR: Right end portion of handle cover
- 9: Rear wheel
- 10: Front cover unit
- 101: Front cover
- 101UL: Front cover upper left portion
- 101UL1: First surface of front cover upper left portion
- 101UL2: Second surface of front cover upper left portion
- 101ULC1: Front cover upper left portion first coupling portion
- 101ULC2: Front cover upper left portion second coupling portion
- 101DL: Front cover lower left portion
- 101DL1: First surface of front cover lower left portion
- 101DL2: Second surface of front cover lower left portion
- 101DL3: Third surface of front cover lower left portion
- 101DLC1: Front cover lower left portion first coupling portion
- 101DLC2: Front cover lower left portion second coupling portion
- 101DLC3: Front cover lower left portion third coupling portion
- 101UR: Front cover upper right portion
- 101UR1: First surface of front cover upper right portion
- 101UR2: Second surface of front cover upper right portion
- 101URC1: Front cover upper right portion first coupling portion
- 101URC2: Front cover upper right portion second coupling portion
- 101DR: Front cover lower right portion
- 101DR1: First surface of front cover lower right portion
- 101DR2: Second surface of front cover lower right portion
- 101DR3: Third surface of front cover lower right portion
- 101DRC1: Front cover lower right portion first coupling portion
- 101DRC2: Front cover lower right portion second coupling portion
- 101DRC3: Front cover lower right portion third coupling portion
- 101O: Opening
- 102: Leg shield
- 102UL: Leg shield upper left portion
- 102UL1: First surface of leg shield upper left portion
- 102UL2: Second surface of leg shield upper left portion
- 102ULC1: Leg shield upper left portion first coupling portion
- 102ULC2: Leg shield upper left portion second coupling portion
- 102DL: Leg shield lower left portion
- 102DL1: Left side surface of leg shield lower left portion
- 102DL2: Left fitting portion of leg shield
- 102DLC1: Leg shield lower left portion first coupling portion
- 102DLC2: Leg shield lower left portion second coupling portion
- 102DLC3: Leg shield lower left portion third coupling portion
- 102UR: Leg shield upper right portion
- 102UR1: First surface of leg shield upper right portion
- 102UR2: Second surface of leg shield upper right portion
- 102URC1: Leg shield upper right portion first coupling portion
- 102URC2: Leg shield upper right portion second coupling portion
- 102DR: Leg shield lower right portion
- 102DR1: Right side surface of leg shield lower right portion
- 102DR2: Right fitting portion of leg shield
- 102DRC1: Leg shield lower right portion first coupling portion
- 102DRC2: Leg shield lower right portion second coupling portion
- 102DRC3: Leg shield lower right portion third coupling portion
- 11: Rear cover
- 12: Lower cover
- 13: Footboard portion
- 14: Headlight
- 15: Left side reinforcement cover
- 15A: Left side reinforcement cover left front portion
- 15A1: Upper edge of left side reinforcement cover left front portion
- 15A2: Lower edge of left side reinforcement cover left front portion
- 15A3: Left edge of left side reinforcement cover left front portion
- 15AA: Bulging portion
- 15B: Left side reinforcement cover left rear portion
- 15B1: Upper edge of left side reinforcement cover left rear portion
- 15B2: Rear edge of left side reinforcement cover left rear portion
- 15B3: Front edge of left side reinforcement cover left rear portion
- 15B4: Left edge of left side reinforcement cover left rear portion
- 15BA: Bulging portion
- 15BB: Downward extending portion
- 15BB1: Left edge
- 15S: Ridgeline
- 16: Right side reinforcement cover
- 16A: Right side reinforcement cover right front portion
- 16A1: Upper edge of right side reinforcement cover right front portion
- 16A2: Lower edge of right side reinforcement cover right front portion
- 16B: Right side reinforcement cover right rear portion
- 16B1: Upper edge of right side reinforcement cover right rear portion
- 16B2: Rear edge of right side reinforcement cover right rear portion
- 16B3: Front edge of right side reinforcement cover right rear portion
- 16B4: Right edge of right side reinforcement cover right rear portion
- 16BA: Bulging portion
- 16BB: Downward extending portion
- 16BB1: Right edge
- 16S: Ridgeline
- 21: Head pipe
- 22: Down frame
- 23: Lower frame
- 24: Rear frame
- 901: Straddled vehicle
- 906: Seat
- 910: Front cover unit
- 915: Front cover
- 916: Leg shield
- 919: Footboard
- B: Boundary
- BL1: Boundary
- BL2: Boundary
- BL3: Boundary
- BL4: Boundary
- BL5: Boundary
- BR1: Boundary
- BR2: Boundary
- BR3: Boundary
- BR4: Boundary
- BR5: Boundary
- C: Vertical line
- B': Boundary
- H': Virtual horizontal line

## Claims

1. A straddled vehicle comprising:
a head pipe (21);
a seat (6) arranged further to a rear of the vehicle with regards to a vehicle front-back direction than the head pipe (21) and including a sitting surface (6S1) configured for a driver to sit on;
a front cover unit (10) arranged further to a front with regards to the vehicle front-back direction than the seat (6);
a footboard portion (13) configured for the driver to place his/her feet, the footboard portion (13) being formed in a position below, with regards to a vehicle up-down direction, and behind, with regards to the vehicle front-back direction, the front cover unit (10) and between the front cover unit (10) and the seat (6);
a left side reinforcement cover (15) formed separately from the front cover unit (10);
a right side reinforcement cover (16) formed separately from the front cover unit (10);
the front cover unit (10) including a front cover (101) arranged in front of the head pipe (21) with regards to the vehicle front-back direction and formed in a manner of extending forward, with regards to the vehicle front-back direction, and downward with regards to a vehicle up-down direction, and a leg shield (102) arranged to the rear of the head pipe (21) and connected to the front cover (101);
the front cover (101) including a front cover upper left portion (101UL) positioned above, with regards to the vehicle up-down direction, a virtual horizontal line (H) that passes through the sitting surface (6S1) of the seat (6) as seen in a left side view of the vehicle with regards to a vehicle left-right direction, a front cover lower left portion (101DL) positioned below the virtual horizontal line (H) as seen in the left side view of the vehicle, a front cover upper right portion (101UR) positioned above the virtual horizontal line (H) as seen in a right side view of the vehicle with regards to the vehicle left-right direction, and a front cover lower right portion (101DR) positioned below the virtual horizontal line (H) as seen in the right side view of the vehicle;
the leg shield (102) including a leg shield upper left portion (102UL) positioned above the virtual horizontal line (H) as seen in the left side view of the vehicle, a leg shield lower left portion (102DL) positioned below the virtual horizontal line (H) as seen in the left side view of the vehicle, a leg shield upper right portion (102UR) positioned above the virtual horizontal line (H) as seen in the right side view of the vehicle, and a leg shield lower right portion (102DR) positioned below the virtual horizontal line (H) as seen in the right side view of the vehicle,
the front cover upper left portion (101UL) and the leg shield upper left portion (102UL) being arranged further to an inside in a vehicle width direction than at least a portion of the front cover lower left portion (101DL), and the front cover upper right portion (101 UR) and the leg shield upper right portion (102UR) being arranged further to the inside in the vehicle width direction than at least a portion of the front cover lower right portion (101DR) as seen in a front view of the vehicle;
at least a portion of a boundary (B) that adjoins the front cover (101) and the leg shield (102) extending in the vehicle up-down direction as seen in the left and right side views of the vehicle;
the left side reinforcement cover (15) being arranged to an outside in the vehicle width direction of the front cover upper left portion (101UL) and the leg shield upper left portion (102UL) as seen in the plan view of the vehicle, and at least a portion of the left side reinforcement cover (15) protruding further to the outside in the vehicle width direction than the boundary (B) that adjoins the front cover (101) and the leg shield (102) as seen in the plan view of the vehicle and overlapping the boundary (B) that adjoins the front cover (101) and the leg shield (102) as seen in the left side view of the vehicle;
the right side reinforcement cover (16) being arranged to the outside in the vehicle width direction of the front cover upper right portion (101UR) and the leg shield upper right portion (102UR) as seen in the plan view of the vehicle, and at least a portion of the right side reinforcement cover (16) protruding further to the outside in the vehicle width direction than the boundary (B) that adjoins the front cover (101) and the leg shield (102) as seen in the plan view of the vehicle and overlapping the boundary (B) that adjoins the front cover (101) and the leg shield (102) as seen in the right side view of the vehicle;
the left side reinforcement cover (15) including a left side reinforcement cover left front portion (15A) positioned further to the front than the boundary (B) that adjoins the front cover (101) and the leg shield (102) and connected to the front cover (101), and a left side reinforcement cover left rear portion (15B) positioned further to the rear than the boundary (B) that adjoins the front cover (101) and the leg shield (102) and connected to the leg shield, as seen in the left side view of the vehicle;
the left side reinforcement cover left front portion (15A) being longer than the left side reinforcement cover left rear portion (15B) in the vehicle front-back direction as seen in the left side view of the vehicle;
the right side reinforcement cover (16) including a right side reinforcement cover right front portion (16A) positioned further to the front than the boundary (B) that adjoins the front cover (101) and the leg shield (102) and connected to the front cover (101), and a right side reinforcement cover right rear portion (16B) positioned further to the rear than the boundary (B) that adjoins the front cover (101) and the leg shield (102) and connected to the leg shield, as seen in the right side view of the vehicle;
the right side reinforcement cover right front portion (16A) being longer than the right side reinforcement cover right rear portion (16B) in the vehicle front-back direction as seen in the right side view of the vehicle;
**characterized by** the left side reinforcement cover left rear portion (15B) being longer than the left side reinforcement cover left front portion (15A) in the vehicle up-down direction as seen in the left side view of the vehicle; and
the right side reinforcement cover right rear portion (16B) being longer than the right side reinforcement cover right front portion (16A) in the vehicle up-down direction as seen in the right side view of the vehicle.

2. The straddled vehicle according to claim 1, wherein an upper edge (15B1) of the left side reinforcement cover left rear portion (15B) is formed in a manner of extending forward and upward of the vehicle, and an upper edge (15A1) of the left side reinforcement cover left front portion (15A) is formed in a manner of extending forward and downward of the vehicle from a front end of the upper edge (15B1) of the left side reinforcement cover left rear portion (15B), as seen in the left side view of the vehicle; and
an upper edge (16B1) of the right side reinforcement cover right rear portion (16B) is formed in a manner of extending forward and upward of the vehicle, and an upper edge (16A1) of the right side reinforcement cover right front portion (16A) is formed in a manner of extending forward and downward of the vehicle from a front end of the upper edge (16B1) of the right side reinforcement cover right rear portion (16B), as seen in the right side view of the vehicle.

3. The straddled vehicle according to claim 1 or 2, wherein a ridgeline (15S) that adjoins the left side reinforcement cover left front portion (15A) and the left side reinforcement cover left rear portion (15B) has its upper end adjacent to the boundary (B) that adjoins the front cover (101) and the leg shield (102) and matches the boundary (B) that adjoins the front cover (101) and the leg shield (102) in the front-back direction as seen in the left side view of the vehicle, and a ridgeline (16S) that adjoins the right side reinforcement cover right front portion (16A) and the right side reinforcement cover right rear portion (16B) has its upper end adjacent to the boundary (B) that adjoins the front cover (101) and the leg shield (102) and matches the boundary (B) that adjoins the front cover (101) and the leg shield (102) in the front-back direction as seen in the right side view of the vehicle.

4. The straddled vehicle according to at least one of the claims 1 to 3, wherein a portion of the left side reinforcement cover left rear portion (15B) positioned below a rear end of a lower edge (15A2) of the left side reinforcement cover left front portion (15A) is arranged further to the inside in the vehicle width direction than the left side reinforcement cover left front portion (15A), as seen in a rear view of the vehicle; and
a portion of the right side reinforcement cover right rear portion (16B) positioned further below a rear end (16A2) of a lower edge of the right side reinforcement cover right front portion (16A) is arranged further to the inside in the vehicle width direction than the right side reinforcement cover right front portion (16A), as seen in the rear view of the vehicle.

5. The straddled vehicle according to at least one of the claims 1 to 4, wherein the front cover upper left portion (101UL) includes an upper left portion first coupling portion (101ULC1) that extends outward in the vehicle width direction as seen in the front view, and an upper left portion second coupling portion (101ULC2) that extends downward in the vehicle up-down direction from an outer end portion in the vehicle width direction of the upper left portion first coupling portion (101ULC1) as seen in the front view;
the front cover lower left portion (101DL) includes a lower left portion first coupling portion (101DLC1) that extends further to the outside in the vehicle width direction than a lower end portion of the upper left portion second coupling portion (101ULC2) as seen in the front view, and a lower left portion second coupling portion (101DLC2) that extends downward in the vehicle up-down direction from an outer end portion of the lower left portion first coupling portion (101DLC1) as seen in the front view;
the front cover upper right portion (101UR) includes an upper right portion first coupling portion (101URC1) that extends outward in the vehicle width direction as seen in the front view, and an upper right portion second coupling portion (101URC2) that extends downward in the vehicle up-down direction from an outer end portion in the vehicle width direction of the upper right portion first coupling portion (101URC1) as seen in the front view; and
the front cover lower right portion (101DR) includes a lower right portion first coupling portion (101DRC1) that extends further to the outside in the vehicle width direction than a lower end portion of the upper right portion second coupling portion (101URC2) as seen in the front view, and a lower right portion second coupling portion (101DRC2) that extends downward in the vehicle up-down direction from an outer end portion of the lower right portion first coupling portion (101DRC1) as seen in the front view.

6. The straddled vehicle according to at least one of the claims 1 to 5, wherein an outer end portion in the vehicle width direction of the left side reinforcement cover (15), as seen in the plan view of the vehicle, is adjacent to an outer end portion in the vehicle width direction of the front cover lower left portion (101DL) in the vehicle width direction, and does not protrude further to the outside in the vehicle width direction than the outer end portion in the vehicle width direction of the front cover lower left portion (101DL); and
an outer end portion in the vehicle width direction of the right side reinforcement cover (16), as seen in the plan view of the vehicle, is adjacent to an outer end portion in the vehicle width direction of the front cover lower right portion (101DR) in the vehicle width direction, and does not protrude further to the outside in the vehicle width direction than the outer end portion in the vehicle width direction of the front cover lower right portion (101DR).

7. The straddled vehicle according to at least one of the claims 1 to 5, wherein at least a portion of the left side reinforcement cover left front portion (15A) is positioned below the virtual horizontal line (H) as seen in the left side view of the vehicle; and
at least a portion of the right side reinforcement cover right front portion (16A) is positioned below the virtual horizontal line (H) as seen in the right side view of the vehicle.

8. The straddled vehicle according to at least one of the claims 1 to 7, wherein the left side reinforcement cover left front portion (15A) is formed in a manner of protruding outward in the vehicle width direction from the front cover upper left portion (101UL) as seen in the front view of the vehicle, and the right side reinforcement cover right front portion (16A) is formed in a manner of protruding outward in the vehicle width direction from the front cover upper right portion (101UR), as seen in the front view of the vehicle.

9. The straddled vehicle according to at least one of the claims 1 to 8, wherein a headlight (14) is arranged on the front cover (101);
at least a portion of the headlight (14) is positioned below the virtual horizontal line (H) as seen in the left and right side views of the vehicle;
the left side reinforcement cover left front portion (15A) extends forward and downward of the vehicle and a front end portion thereof is formed in a manner of overlapping the headlight (14), as seen in the left side view of the vehicle; and
the right side reinforcement cover right front portion (16A) extends forward and downward of the vehicle and a front end portion thereof is formed in a manner of overlapping the headlight (14), as seen in the right side view of the vehicle.

## Patentansprüche

1. Ein gespreiztes Fahrzeug, umfassend:
ein Kopfrohr (21);
einen Sitz (6), der in Bezug auf eine Fahrzeug-Vorne-Hinten-Richtung weiter zu einer Rückseite des Fahrzeugs angeordnet ist als das Kopfrohr (21) und eine Sitzfläche (6S1) enthält, die so konfiguriert ist, dass ein Fahrer darauf sitzen kann;
eine vordere Abdeckeinheit (10), die in Bezug auf die Fahrzeug-Vorne-Hinten-Richtung des Fahrzeugs weiter zu einer Vorderseite angeordnet ist als der Sitz (6);
einen Fußbrettabschnitt (13), der so konfiguriert ist, dass der Fahrer seine Füße darauf platzieren kann, wobei der Fußbrettabschnitt (13) in einer Position unterhalb, in Bezug auf eine Fahrzeug-Oben-Unten-Richtung, und hinter, in Bezug auf die Fahrzeug-Vorne-Hinten-Richtung, der vorderen Abdeckeinheit (10), und zwischen der vorderen Abdeckeinheit (10) und dem Sitz (6) ausgebildet ist;
eine linke Seitenverstärkungsabdeckung (15), die getrennt von der vorderen Abdeckungseinheit (10) ausgebildet ist;
eine rechte Seitenverstärkungsabdeckung (16), die getrennt von der vorderen Abdeckungseinheit (10) ausgebildet ist;
die vordere Abdeckeinheit (10) eine vordere Abdeckung (101), die vor dem Kopfrohr (21) in Bezug auf die Fahrzeug-Vorne-Hinten-Richtung angeordnet ist und in einer Weise ausgebildet ist, dass sie sich, in Bezug auf die Fahrzeug-Vorne-Hinten-Richtung, nach vorne und, in Bezug auf eine Fahrzeug-Oben-Unten-Richtung nach unten erstreckt, und eine Beinabschirmung (102) enthält, die an der Rückseite des Kopfrohrs (21) angeordnet und mit der vorderen Abdeckung (101) verbunden ist;
die vordere Abdeckung (101) einen oberen linken Abschnitt (101UL) der vorderen Abdeckung, der in Bezug auf die Fahrzeug-Oben-Unten-Richtung oberhalb einer virtuellen horizontalen Linie (H) positioniert ist, die durch die Sitzfläche (6S1) des Sitzes (6) verläuft, wenn in einer linken Seitenansicht des Fahrzeugs in Bezug auf eine Fahrzeug-Links-Rechts-Richtung gesehen, einen unteren linken Abschnitt (101DL) der vorderen Abdeckung, der unterhalb der virtuellen horizontalen Linie (H) positioniert ist, wenn in der linken Seitenansicht des Fahrzeugs gesehen, einen oberen rechten Abschnitt (101UR) der vorderen Abdeckung, der oberhalb der virtuellen horizontalen Linie (H) positioniert ist, wenn in einer rechten Seitenansicht des Fahrzeugs in Bezug auf die Fahrzeug-Links-Rechts-Richtung gesehen, und einen unteren rechten Abschnitt (101DR) der vorderen Abdeckung enthält, der unterhalb der virtuellen horizontalen Linie (H) positioniert ist, wenn in der rechten Seitenansicht des Fahrzeugs gesehen;
die Beinabschirmung (102) einen oberen linken Abschnitt (102UL) der Beinabschirmung, der oberhalb der virtuellen horizontalen Linie (H) positioniert ist, wenn in der linken Seitenansicht des Fahrzeugs gesehen, einen linken unteren Abschnitt (102DL) der Beinabschirmung, der unterhalb der virtuellen horizontalen Linie (H) positioniert ist, wenn in der linken Seitenansicht des Fahrzeugs gesehen, einen rechten oberen Abschnitt (102UR) der Beinabschirmung, der oberhalb der virtuellen horizontalen Linie (H) positioniert ist, wenn in der rechten Seitenansicht des Fahrzeugs gesehen, und einen rechten unteren Abschnitt (102DR) der Beinabschirmung enthält, der unterhalb der virtuellen horizontalen Linie (H) positioniert ist, wenn in der rechten Seitenansicht des Fahrzeugs gesehen,
der obere linke Abschnitt (101UL) der vorderen Abdeckung und der obere linke Abschnitt (102UL) der Beinabschirmung in der Fahrzeugbreitenrichtung weiter zu einer Innenseite angeordnet sind als zumindest ein Abschnitt des unteren linken Abschnitts (101DL) der vorderen Abdeckung, und der obere rechte Abschnitt (101UR) der vorderen Abdeckung und der obere rechte Abschnitt (102UR) der Beinabschirmung weiter zu der Innenseite in der Fahrzeugbreitenrichtung als zumindest ein Abschnitt des unteren rechten Abschnitts (101DR) der vorderen Abdeckung angeordnet sind, wenn in der Vorderansicht des Fahrzeugs gesehen;
zumindest ein Abschnitt einer Begrenzung (B), die an die vordere Abdeckung (101) und die Beinabschirmung (102) angrenzt, sich in der Fahrzeug-Oben-Unten-Richtung erstreckt, wenn in den linken und rechten Seitenansichten des Fahrzeugs gesehen;
wobei die linke Seitenverstärkungsabdeckung (15) in der Fahrzeugbreitenrichtung an der Außenseite des oberen linken Abschnitts (101UL) der vorderen Abdeckung und des oberen linken Abschnitts (102UL) der Beinabschirmung angeordnet ist, wenn in der Draufsicht des Fahrzeugs gesehen, und zumindest ein Abschnitt der linken Seitenverstärkungsabdeckung (15) in Fahrzeugbreitenrichtung weiter zur Außenseite vorsteht als die Begrenzung (B), die an die vordere Abdeckung (101) und die Beinabschirmung (102) angrenzt, wenn in der Draufsicht des Fahrzeugs gesehen, und die Begrenzung (B), die an die vordere Abdeckung (101) und die Beinabschirmung (102) angrenzt, überlappt, wenn in der linken Seitenansicht des Fahrzeugs gesehen;
wobei die rechte Seitenverstärkungsabdeckung (16) in der Fahrzeugbreitenrichtung an der Außenseite des oberen rechten Abschnitts (101UR) der vorderen Abdeckung und des oberen rechten Abschnitts (102UR) der Beinabschirmung angeordnet ist, wenn in der Draufsicht des Fahrzeugs gesehen, und zumindest ein Abschnitt der rechten Seitenverstärkungsabdeckung (15) in Fahrzeugbreitenrichtung weiter zur Außenseite vorsteht als die Begrenzung (B), die an die vordere Abdeckung (101) und die Beinabschirmung (102) angrenzt, wenn in der Draufsicht des Fahrzeugs gesehen, und die Begrenzung (B), die an die vordere Abdeckung (101) und die Beinabschirmung (102) angrenzt, überlappt, wenn in der rechten Seitenansicht des Fahrzeugs gesehen;
; die linke Seitenverstärkungsabdeckung (15) einen linken vorderen Abschnitt (15A) der linken Seitenverstärkungsabdeckung, der weiter zur Vorderseite als die Begrenzung (B) positioniert ist, die an die vordere Abdeckung (101) und die Beinabschirmung (102) angrenzt, und mit der vorderen Abdeckung (101) verbunden ist, und einen linken hinteren Abschnitt einer linken Seitenverstärkungsabdeckung (15B) enthält, der weiter zur Rückseite als die Begrenzung (B) positioniert ist, die an die vordere Abdeckung (101) und die Beinabschirmung (102) angrenzt, und mit der Beinabschirmung verbunden ist, wenn in der linken Seitenansicht des Fahrzeugs gesehen;
der linke vordere Abschnitt (15A) der linken Seitenverstärkungsabdeckung ist länger als der linke hintere Abschnitt (15B) der linken Seitenverstärkungsabdeckung in der Fahrzeug-Vorne-Hinten-Richtung, wenn in der linken Seitenansicht des Fahrzeugs gesehen;
die rechte Seitenverstärkungsabdeckung (16) einen rechten vorderen Abschnitt (16A) der rechten Seitenverstärkungsabdeckung, der weiter zur Vorderseite als die Begrenzung (B) positioniert ist, die an die vordere Abdeckung (101) und die Beinabschirmung (102) angrenzt, und mit der vorderen Abdeckung (101) verbunden ist, und einen rechten hinteren Abschnitt einer rechten Seitenverstärkungsabdeckung (16B) enthält, der weiter zur Rückseite als die Begrenzung (B) positioniert ist, die an die vordere Abdeckung (101) und die Beinabschirmung (102) angrenzt, und mit der Beinabschirmung verbunden ist, wenn in der rechten Seitenansicht des Fahrzeugs gesehen;
der rechte vordere Abschnitt (16A) der rechten Seitenverstärkungsabdeckung ist länger als der rechte hintere Abschnitt (16B) der rechten Seitenverstärkungsabdeckung in der Fahrzeug-Vorne-Hinten-Richtung, wenn in der rechten Seitenansicht des Fahrzeugs gesehen;
**dadurch gekennzeichnet, dass** der linke hintere Abschnitt (15B) der linken Seitenverstärkungsabdeckung länger ist als der linke vordere Abschnitt (15A) der linken Seitenverstärkungsabdeckung in der Fahrzeug-Oben-Unten-Richtung, wenn in der linken Seitenansicht des Fahrzeugs gesehen; und
der rechte hintere Abschnitt (16B) der rechten Seitenverstärkungsabdeckung länger ist als der rechte vordere Abschnitt (16A) der rechten Seitenverstärkungsabdeckung in der Fahrzeug-Oben-Unten-Richtung, wenn in der rechten Seitenansicht des Fahrzeugs gesehen.

2. Das gespreizte Fahrzeug nach Anspruch 1, wobei eine obere Kante (15B1) des linken hinteren Abschnitts (15B) der linken Seitenverstärkungsabdeckung in einer Weise ausgebildet ist, dass sie sich nach vorne und nach oben des Fahrzeugs erstreckt, und eine obere Kante (15A1) des linken vorderen Abschnitts (15A) der linken Seitenverstärkungsabdeckung in einer Weise ausgebildet ist, dass sie sich von einem vorderen Ende der oberen Kante (15B1) des linken hinteren Abschnitts (15B) der linken Seitenverstärkungsabdeckung nach vorne und nach unten des Fahrzeugs erstreckt, wenn in der linken Seitenansicht des Fahrzeugs gesehen; und
eine obere Kante (16B1) des rechten hinteren Abschnitts (16B) der rechten Seitenverstärkungsabdeckung in einer Weise ausgebildet ist, dass sie sich nach vorne und nach oben des Fahrzeugs erstreckt, und eine obere Kante (16A1) des rechten vorderen Abschnitts (16A) der rechten Seitenverstärkungsabdeckung in einer Weise ausgebildet ist, dass sie sich von einem vorderen Ende der oberen Kante (16B1) des rechten hinteren Abschnitts (16B) der rechten Seitenverstärkungsabdeckung nach vorne und nach unten des Fahrzeugs erstreckt, wenn in der rechten Seitenansicht des Fahrzeugs gesehen.

3. Das gespreizte Fahrzeug nach Anspruch 1 oder 2, wobei eine Gratlinie (15S), die an den linken vorderen Abschnitt (15A) der linken Seitenverstärkungsabdeckung und den linken hinteren Abschnitt (15B) der linken Seitenverstärkungsabdeckung angrenzt, ihr oberes Ende aufweist, das an die Begrenzung (B) angrenzt, die an die vordere Abdeckung (101) und die Beinabschirmung (102) angrenzt, und mit der Begrenzung (B) in der Fahrzeug-Vorne-Hinten-Richtung übereinstimmt, die an die vordere Abdeckung (101) und die Beinabschirmung (102) angrenzt, wenn in der linken Seitenansicht des Fahrzeugs gesehen, und eine Gratlinie (16S), die an den rechten vorderen Abschnitt (16A) der rechten Seitenverstärkungsabdeckung und den rechten hinteren Abschnitt (16B) der rechten Seitenverstärkungsabdeckung angrenzt, ihr oberes Ende aufweist, das an die Begrenzung (B) angrenzt, die an die vordere Abdeckung (101) und die Beinabschirmung (102) angrenzt, und mit der Begrenzung (B) in der Fahrzeug-Vorne-Hinten-Richtung übereinstimmt, die an die vordere Abdeckung (101) und die Beinabschirmung (102) angrenzt, wenn in der rechten Seitenansicht des Fahrzeugs gesehen.

4. Das gespreizte Fahrzeug nach zumindest einem der Ansprüche 1 bis 3, wobei ein Abschnitt des linken hinteren Abschnitts (15B) der linken Seitenverstärkungsabdeckung, der weiter unterhalb eines hinteren Endes einer unteren Kante (15A2) des linken vorderen Abschnitts (15A) der linken Seitenverstärkungsabdeckung positioniert ist, in der Fahrzeugbreitenrichtung weiter zur Innenseite angeordnet ist als der linke vordere Abschnitt (15A) der linken Seitenverstärkungsabdeckung, wenn in einer Rückansicht des Fahrzeugs gesehen; und
ein Abschnitt des rechten hinteren Abschnitts (16B) der rechten Seitenverstärkungsabdeckung, der weiter unterhalb eines hinteren Endes einer unteren Kante (16A2) des rechten vorderen Abschnitts (16A) der rechten Seitenverstärkungsabdeckung positioniert ist, in der Fahrzeugbreitenrichtung weiter zur Innenseite angeordnet ist als der rechte vordere Abschnitt (15A) der rechten Seitenverstärkungsabdeckung, wenn in der Rückansicht des Fahrzeugs gesehen.

5. Das gespreizte Fahrzeug nach zumindest einem der Ansprüche 1 bis 4, wobei der obere linke Abschnitt (101UL) der vorderen Abdeckung einen ersten Kopplungsabschnitt (101ULC1) des oberen linken Abschnitts, der sich in der Fahrzeugbreitenrichtung nach außen erstreckt, wenn in der Vorderansicht gesehen, und einen zweiten Kopplungsabschnitt (101ULC2) des oberen linken Abschnitts enthält, der sich von einem äußeren Endabschnitt in der Fahrzeugbreitenrichtung des ersten Kopplungsabschnitts (101ULC1) des oberen linken Abschnitts nach unten in der Fahrzeug-Oben-Unten-Richtung erstreckt, wenn in der Vorderansicht gesehen;
der untere linke Abschnitt (101DL) der vorderen Abdeckung einen ersten Kopplungsabschnitt (101DLC1) des unteren linken Abschnitts, der sich in der Fahrzeugbreitenrichtung weiter nach außen erstreckt als ein unterer Endabschnitt des zweiten Kopplungsabschnitts (101ULC2) des oberen linken Abschnitts, wenn in der Vorderansicht gesehen, und einen zweiten Kopplungsabschnitt (101DLC2) des unteren linken Abschnitts enthält, der sich von einem äußeren Endabschnitt des ersten Kopplungsabschnitts (101DLC1) des unteren linken Abschnitts nach unten in der Fahrzeug-Oben-Unten-Richtung erstreckt, wenn in der Vorderansicht gesehen,
der obere rechte Abschnitt (101UR) der vorderen Abdeckung einen ersten Kopplungsabschnitt (101URC1) des oberen rechten Abschnitts, der sich in der Fahrzeugbreitenrichtung nach außen erstreckt, wenn in der Vorderansicht gesehen, und einen zweiten Kopplungsabschnitt (101URC2) des oberen rechten Abschnitts enthält, der sich von einem äußeren Endabschnitt in der Fahrzeugbreitenrichtung des ersten Kopplungsabschnitts (101URC1) des oberen rechten Abschnitts nach unten in der Fahrzeug-Oben-Unten-Richtung erstreckt, wenn in der Vorderansicht gesehen;
der untere rechte Abschnitt (101DR) der vorderen Abdeckung einen ersten Kopplungsabschnitt (101DRC1) des unteren rechten Abschnitts, der sich in der Fahrzeugbreitenrichtung weiter nach außen erstreckt als ein unterer Endabschnitt des zweiten Kopplungsabschnitts (101URC2) des oberen rechten Abschnitts, wenn in der Vorderansicht gesehen, und einen zweiten Kopplungsabschnitt (101DRC2) des unteren rechten Abschnitts enthält, der sich von einem äußeren Endabschnitt des ersten Kopplungsabschnitts (101 DRC1) des unteren rechten Abschnitts nach unten in der Fahrzeug-Oben-Unten-Richtung erstreckt, wenn in der Vorderansicht gesehen.

6. Das gespreizte Fahrzeug nach zumindest einem der Ansprüche 1 bis 5, wobei ein äußerer Endabschnitt in Fahrzeugbreitenrichtung der linken Seitenverstärkungsabdeckung (15), wenn in der Draufsicht des Fahrzeugs gesehen, zu einem äußeren Endabschnitt in Fahrzeugbreitenrichtung des unteren linken Abschnitts (101DL) der vorderen Abdeckung in Fahrzeugbreitenrichtung benachbart ist, und in Fahrzeugbreitenrichtung nicht weiter nach außen vorsteht als der äußere Endabschnitt in Fahrzeugbreitenrichtung des unteren linken Abschnitts (101DL) der vorderen Abdeckung; und
ein äußerer Endabschnitt in Fahrzeugbreitenrichtung der rechten Seitenverstärkungsabdeckung (16), wenn in der Draufsicht des Fahrzeugs gesehen, zu einem äußeren Endabschnitt in Fahrzeugbreitenrichtung des unteren rechten Abschnitts (101DR) der vorderen Abdeckung in Fahrzeugbreitenrichtung benachbart ist, und in Fahrzeugbreitenrichtung nicht weiter nach außen vorsteht als der äußere Endabschnitt in Fahrzeugbreitenrichtung des unteren rechten Abschnitts (101DL) der vorderen Abdeckung.

7. Das gespreizte Fahrzeug nach zumindest einem der Ansprüche 1 bis 5, wobei zumindest ein Abschnitt des linken vorderen Abschnitts der linken Seitenverstärkungsabdeckung (15A) unterhalb der virtuellen horizontalen Linie (H) positioniert ist, wenn in der linken Seitenansicht des Fahrzeugs gesehen; und
zumindest ein Abschnitt des rechten vorderen Abschnitts der rechten Seitenverstärkungsabdeckung (16A) unterhalb der virtuellen horizontalen Linie (H) positioniert ist, wenn in der rechten Seitenansicht des Fahrzeugs gesehen.

8. Das gespreizte Fahrzeug nach zumindest einem der Ansprüche 1 bis 7, wobei der linke vordere Abschnitt der linken Seitenverstärkungsabdeckung (15A) in einer Weise ausgebildet ist, dass er von dem oberen linken Abschnitt (101UL) der vorderen Abdeckung in der Fahrzeugbreitenrichtung nach außen vorsteht, wenn in der Vorderansicht des Fahrzeugs gesehen, und der rechte vordere Abschnitt der rechten Seitenverstärkungsabdeckung (16A) in einer Weise ausgebildet ist, dass er von dem oberen rechten Abschnitt (101UR) der vorderen Abdeckung in der Fahrzeugbreitenrichtung nach außen vorsteht, wenn in der Vorderansicht des Fahrzeugs gesehen.

9. Das gespreizte Fahrzeug nach zumindest einem der Ansprüche 1 bis 8, wobei an der vorderen Abdeckung (101) ein Scheinwerfer (14) angeordnet ist;
zumindest ein Abschnitt des Scheinwerfers (14) unterhalb der virtuellen horizontalen Linie (H) positioniert ist, wenn in den linken und rechten Seitenansichten des Fahrzeugs gesehen;
der linke vordere Abschnitt (15A) der linken Seitenverstärkungsabdeckung sich nach vorne und nach unten des Fahrzeugs erstreckt und ein vorderer Endabschnitt davon in einer Weise ausgebildet ist, dass er den Scheinwerfer (14) überlappt, wenn in der linken Seitenansicht des Fahrzeugs gesehen; und
der rechte vordere Abschnitt (16A) der rechten Seitenverstärkungsabdeckung sich nach vorne und nach unten des Fahrzeugs erstreckt und ein vorderer Endabschnitt davon in einer Weise ausgebildet ist, dass er den Scheinwerfer (14) überlappt, wenn in der rechten Seitenansicht des Fahrzeugs gesehen.

## Revendications

1. Véhicule à enfourcher comprenant :
un tube de tête (21) ;
un siège (6) agencé plus à l'arrière du véhicule par rapport à une direction avant-arrière du véhicule que le tube de tête (21) et comprenant une surface d'assise (6S1) configurée pour qu'un conducteur s'y asseye ;
une unité de carénage avant (10) agencée plus à l'avant par rapport à la direction avant-arrière du véhicule que le siège (6) ;
une portion de marchepied (13) configurée pour que le conducteur y place ses pieds, la portion de marchepied (13) étant formée dans une position au-dessous, par rapport à une direction haut-bas du véhicule, et en arrière, par rapport à la direction avant-arrière du véhicule, de l'unité de carénage avant (10) et entre l'unité de carénage avant (10) et le siège (6) ;
un carénage de renfort latéral gauche (15) formé séparément de l'unité de carénage avant (10) ;
un carénage de renfort latéral droit (16) formé séparément de l'unité de carénage avant (10) ;
l'unité de carénage avant (10) comprenant un carénage avant (101) agencé devant le tube de tête (21) par rapport à la direction avant-arrière du véhicule et formé de manière à s'étendre vers l'avant par rapport à la direction avant-arrière du véhicule et vers le bas par rapport à une direction haut-bas du véhicule, et un protège-jambes (102) agencé à l'arrière du tube de tête (21) et connecté au carénage avant (101) ;
le carénage avant (101) comprenant une portion supérieure gauche du carénage avant (101UL) positionnée au-dessus, par rapport à la direction haut-bas du véhicule, d'une ligne horizontale virtuelle (H) qui traverse la surface d'assise (6S1) du siège (6) en vue latérale gauche du véhicule par rapport à une direction gauche-droite du véhicule, une portion inférieure gauche du carénage avant (101DL) positionnée au-dessous de la ligne horizontale virtuelle (H) en vue latérale gauche du véhicule, une portion supérieure droite du carénage avant (101UR) positionnée au-dessus de la ligne horizontale virtuelle (H) en vue latérale droite du véhicule par rapport à la direction gauche-droite du véhicule, et une portion inférieure droite du carénage avant (101DR) positionnée au-dessous de la ligne horizontale virtuelle (H) en vue latérale droite du véhicule ;
le protège-jambes (102) comprenant une portion supérieure gauche de protège-jambes (102UL) positionnée au-dessus de la ligne horizontale virtuelle (H) en vue latérale gauche du véhicule, une portion inférieure gauche de protège-jambes (102DL) positionnée au-dessous de la ligne horizontale virtuelle (H) en vue latérale gauche du véhicule, une portion supérieure droite de protège-jambes (102UR) positionnée au-dessus de la ligne horizontale virtuelle (H) en vue latérale droite du véhicule, et une portion inférieure droite de protège-jambes (102DR) positionnée au-dessous de la ligne horizontale virtuelle (H) en vue latérale droite du véhicule, et la portion supérieure gauche du carénage avant (101UL) et la portion supérieure gauche du protège-jambes (102UL) étant agencées plus à l'intérieur dans une direction de la largeur du véhicule qu'au moins une portion de la portion inférieure gauche du carénage avant (101DL), et la portion supérieure droite du carénage avant (101UR) et la portion supérieure droite du protège-jambes (102UR) étant agencées plus à l'intérieur dans la direction de la largeur du véhicule qu'au moins une portion de la portion inférieure droite du carénage avant (101DR) en vue de face du véhicule ;
au moins une portion d'une délimitation (B) qui jouxte le carénage avant (101) et le protège-jambes (102) s'étendant dans la direction haut-bas du véhicule en vue latérale gauche et en vue latérale droite du véhicule ;
le capot de renfort latéral gauche (15) étant agencé à l'extérieur dans la direction de la largeur du véhicule de la portion supérieure gauche du carénage avant (101UL) et de la portion supérieure gauche du protège-jambes (102UL) en vue en plan du véhicule, et au moins une portion du carénage de renfort latéral gauche (15) ressort plus loin à l'extérieur dans la direction de la largeur du véhicule que la délimitation (B) qui jouxte le carénage avant (101) et le protège-jambes (102) en vue en plan du véhicule et chevauche la délimitation (B) qui jouxte le carénage avant (101) et le protège-jambes (102) en vue latérale gauche du véhicule ;
le carénage de renfort latéral droit (16) étant agencé à l'extérieur dans la direction de la largeur du véhicule de la portion supérieure droite du carénage avant (101UR) et de la portion supérieure droite du protège-jambes (102UR) en vue en plan du véhicule, et au moins une portion du carénage de renfort latéral droit (16) ressort plus à l'extérieur dans la direction de la largeur du véhicule que la délimitation (B) qui jouxte le carénage avant (101) et le protège-jambes (102) en vue en plan du véhicule et chevauche la délimitation (B) qui jouxte le carénage avant (101) et le protège-jambes (102) en vue latérale droite du véhicule ;
le carénage de renfort latéral gauche (15) comprenant une portion avant gauche du carénage de renfort latéral gauche (15A) positionnée plus à l'avant que la délimitation (B) qui jouxte le carénage avant (101) et le protège-jambes (102) et connectée au carénage avant (101), et une portion arrière gauche du carénage de renfort latéral gauche (15B) positionnée plus à l'arrière que la délimitation (B) qui jouxte le carénage avant (101) et le protège-jambes (102) et connectée au protège-jambes, en vue latérale gauche du véhicule ;
la portion avant gauche du carénage de renfort latéral gauche (15A) étant plus longue que la portion arrière gauche du carénage de renfort latéral gauche (15B) dans la direction avant-arrière du véhicule en vue latérale gauche du véhicule ;
le carénage de renfort latéral droit (16) comprenant une portion avant droite du carénage de renfort latéral droit (16A) positionnée plus à l'avant que la délimitation (B) qui jouxte le carénage avant (101) et le protège-jambes (102) et connectée au carénage avant (101), et une portion arrière droite du carénage de renfort latéral droit (16B) positionnée plus à l'arrière que la délimitation (B) qui jouxte le carénage avant (101) et le protège-jambes (102) et connectée au protège-jambes , en vue latérale droite du véhicule ;
la portion avant droite du carénage de renfort latéral droit (16A) étant plus longue que la portion arrière droite du carénage de renfort latéral droit (16B) dans la direction avant-arrière du véhicule, en vue latérale droite du véhicule ;
**caractérisé en ce que** la portion arrière gauche du carénage de renfort latéral gauche (15B) est plus longue que la portion avant gauche du carénage de renfort latéral gauche (15A) dans la direction haut-bas du véhicule en vue latérale gauche du véhicule ; et
la portion arrière droite du carénage de renfort latéral droit (16B) est plus longue que la portion avant droite du carénage de renfort latéral droit (16A) dans la direction haut-bas du véhicule en vue latérale droite du véhicule.

2. Véhicule à enfourcher selon la revendication 1, dans lequel
un bord supérieur (15B1) de la portion arrière gauche du carénage de renfort latéral gauche (15B) est formé de manière à s'étendre vers l'avant et vers le haut du véhicule, et un bord supérieur (15A1) de la portion avant gauche du carénage de renfort latéral gauche (15A) est formé de manière à s'étendre vers l'avant et vers le bas du véhicule à partir d'une extrémité avant du bord supérieur (15B1) de la portion arrière gauche du carénage de renfort latéral gauche (15B), en vue latérale gauche du véhicule ; et
un bord supérieur (16B1) de la portion arrière droite du carénage de renfort latéral droit (16B) est formé de manière à s'étendre vers l'avant et vers le haut du véhicule, et un bord supérieur (16A1) de la portion avant droite du carénage de renfort latéral droit (16A) est formé de manière à s'étendre vers l'avant et vers le bas du véhicule à partir d'une extrémité avant du bord supérieur (16B1) de la portion arrière droite du carénage de renfort latéral droit (16B), en vue latérale droite du véhicule.

3. Véhicule à enfourcher selon la revendication 1 ou 2, dans lequel une ligne de crête (15S) qui jouxte la portion avant gauche du carénage de renfort latéral gauche (15A) et la portion arrière gauche du carénage de renfort latéral gauche (15B) a son extrémité supérieure adjacente à la délimitation (B) qui jouxte le carénage avant (101) et le protège-jambes (102) et correspond à la délimitation (B) qui jouxte le carénage avant (101) et le protège-jambes (102) dans la direction avant-arrière en vue latérale gauche du véhicule, et une ligne de crête (16S) qui jouxte la portion avant droite du carénage de renfort latéral droit (16A) et la portion arrière droite du carénage de renfort latéral droit (16B) a son extrémité supérieure adjacente à la délimitation (B) qui jouxte le carénage avant (101) et le protège-jambes (102) et correspond à la délimitation (B) qui jouxte le carénage avant (101) et le protège-jambes (102) dans la direction avant-arrière en vue latérale droite du véhicule.

4. Véhicule à enfourcher selon au moins l'une des revendications 1 à 3, dans lequel
une portion de la portion arrière gauche du carénage de renfort latéral gauche (15B) positionnée au-dessous d'une extrémité arrière d'un bord inférieur (15A2) de la portion avant gauche du carénage de renfort latéral gauche (15A) est agencée plus à l'intérieur dans la direction de la largeur du véhicule que la portion avant gauche du carénage de renfort latéral gauche (15A) en vue arrière du véhicule ; et
une portion de la portion arrière droite du carénage de renfort latéral droit (16B) positionnée plus au-dessous d'une extrémité arrière d'un bord inférieur (16A2) de la portion avant droite du carénage de renfort latéral droit (16A) est agencée plus à l'intérieur dans la direction de la largeur du véhicule que la portion avant droite du carénage de renfort latéral droit (16A), en vue arrière du véhicule.

5. Véhicule à enfourcher selon au moins l'une des revendications 1 à 4, dans lequel
la portion supérieure gauche du carénage avant (101UL) comprend une première portion d'accouplement de la portion supérieure gauche (101ULC1) qui s'étend vers l'extérieur dans la direction de la largeur du véhicule en vue de face, et une deuxième portion d'accouplement de la portion supérieure gauche (101ULC2) qui s'étend vers le bas dans la direction haut-bas du véhicule à partir d'une portion d'extrémité externe dans la direction de la largeur du véhicule de la première portion d'accouplement de la portion supérieure gauche (101ULC1) en vue de face ;
la portion inférieure gauche du carénage avant (101DL) comprend une première portion d'accouplement de la portion inférieure gauche (101DLC1) qui s'étend plus à l'extérieur dans la direction de la largeur du véhicule qu'une portion d'extrémité inférieure de la deuxième portion d'accouplement de la portion supérieure gauche (101ULC2) en vue de face, et une deuxième portion d'accouplement de la portion inférieure gauche (101DLC2) qui s'étend vers le bas dans la direction haut-bas du véhicule à partir d'une portion d'extrémité externe de la première portion d'accouplement de la portion inférieure gauche (101DLC1) en vue de face ;
la portion supérieure droite du carénage avant (101UR) comprend une première portion d'accouplement de la portion supérieure droite (101URC1) qui s'étend vers l'extérieur dans la direction de la largeur du véhicule en vue de face, et une deuxième portion d'accouplement de la portion supérieure droite (101URC2) qui s'étend vers le bas dans la direction haut-bas du véhicule à partir d'une portion d'extrémité externe dans la direction de la largeur du véhicule de la première portion d'accouplement de la portion supérieure droite (101URC1) en vue de face ; et
la portion inférieure droite du carénage avant (101DR) comprend une première portion d'accouplement de la portion inférieure droite (101DRC1) qui s'étend plus à l'extérieur dans la direction de la largeur du véhicule qu'une portion d'extrémité inférieure de la deuxième portion d'accouplement de la portion supérieure droite (101URC2) en vue de face, et une deuxième portion d'accouplement de la portion inférieure droite (101DRC2) qui s'étend vers le bas dans la direction haut-bas du véhicule à partir d'une portion d'extrémité externe de la première portion d'accouplement de la portion inférieure droite (101DRC1) en vue de face.

6. Véhicule à enfourcher selon au moins l'une des revendications 1 à 5, dans lequel
une portion d'extrémité externe dans la direction de la largeur du véhicule du carénage de renfort latéral gauche (15), en vue en plan du véhicule, est adjacente à une portion d'extrémité externe dans la direction de la largeur du véhicule de la portion inférieure gauche du carénage avant (101DL) dans la direction de la largeur du véhicule, et ne ressort pas plus vers l'extérieur dans la direction de la largeur du véhicule que la portion d'extrémité externe dans la direction de la largeur du véhicule de la portion inférieure gauche du carénage avant (101DL) ; et
une portion d'extrémité externe dans la direction de la largeur du véhicule du carénage de renfort latéral droit (16), en vue en plan du véhicule, est adjacente à une portion d'extrémité externe dans la direction de la largeur du véhicule de la portion inférieure droite du carénage avant (101DR) dans la direction de la largeur du véhicule, et ne ressort pas plus vers l'extérieur dans la direction de la largeur du véhicule que la portion d'extrémité externe dans la direction de la largeur du véhicule de la portion inférieure droite du carénage avant (101DR).

7. Véhicule à enfourcher selon au moins l'une des revendications 1 à 5, dans lequel
au moins une portion de la portion avant gauche du carénage de renfort latéral gauche (15A) est positionnée au-dessous de la ligne horizontale virtuelle (H) en vue latérale gauche du véhicule ; et
au moins une portion de la portion avant droite du carénage de renfort latéral droit (16A) est positionnée au-dessous de la ligne horizontale virtuelle (H) en vue latérale droite du véhicule.

8. Véhicule à enfourcher selon au moins l'une des revendications 1 à 7, dans lequel la portion avant gauche du carénage de renfort latéral gauche (15A) est formée de manière à ressortir vers l'extérieur dans la direction de la largeur du véhicule depuis la portion supérieure gauche du carénage avant (101UL) en vue de face du véhicule, et la portion avant droite du carénage de renfort latéral droit (16A) est formée de manière à ressortir vers l'extérieur dans la direction de la largeur du véhicule depuis la portion supérieure droite du carénage avant (101UR), en vue de face du véhicule.

9. Véhicule à enfourcher selon au moins l'une des revendications 1 à 8, dans lequel
un phare (14) est agencé sur le carénage avant (101) ;
au moins une portion du phare (14) est positionnée au-dessous de la ligne horizontale virtuelle (H) en vue latérale gauche et en vue latérale droite du véhicule ;
la portion avant gauche du carénage de renfort latéral gauche (15A) s'étend vers l'avant et vers le bas du véhicule, et une portion d'extrémité avant de celle-ci est formée de manière à chevaucher le phare (14), en vue latérale gauche du véhicule ; et
la portion avant droite du carénage de renfort latéral droit (16A) s'étend vers l'avant et vers le bas du véhicule, et une portion d'extrémité avant de celle-ci est formée de manière à chevaucher le phare (14), en vue latérale droite du véhicule.
